(19) Europäisches Patentamt / European Patent Office / Office européen des brevets

(11) **EP 4 061 046 B1**

(12) **EUROPEAN PATENT SPECIFICATION**

(45) Date of publication and mention
of the grant of the patent:
**26.02.2025 Bulletin 2025/09**

(21) Application number: **20891777.3**

(22) Date of filing: **30.11.2020**

(51) International Patent Classification (IPC):
***H04B 10/11*** *(2013.01)*     ***H04W 68/00*** *(2009.01)*

(52) Cooperative Patent Classification (CPC):
**H04W 68/02; H04B 7/18513**

(86) International application number:
**PCT/CN2020/132748**

(87) International publication number:
**WO 2021/104518 (03.06.2021 Gazette 2021/22)**

(54) **PAGING A USER TERMINAL USING ORBITAL ANGULAR MOMENTUM MODALITIES**

AUSRUFEN EINES BENUTZERTERMINALS MIT ORBITALEM DREHIMPULS MODALITÄTEN

RADIOMESSAGERIE D'UN TERMINAL D'UTILISATEUR UTILISANT MODALITÉS DU MOMENT ANGULAIRE ORBITAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2019 CN 201911209235**

(43) Date of publication of application:
**21.09.2022 Bulletin 2022/38**

(73) Proprietor: **Huawei Technologies Co., Ltd.
Shenzhen, Guangdong 518129 (CN)**

(72) Inventor: **YU, Rongdao
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(56) References cited:
EP-A1- 3 668 207     EP-A1- 3 780 765
EP-A1- 4 064 584     EP-A1- 4 075 905
WO-A1-2019/030938     WO-A1-2019/186222
WO-A1-2019/192303     CN-A- 107 888 321
CN-A- 109 862 622     CN-A- 110 062 358
US-A1- 2016 270 028     US-A1- 2016 338 005
US-A1- 2017 086 165     US-A1- 2017 117 626
US-A1- 2019 020 434     US-A1- 2019 198 999

• CHENG WENCHI ET AL: "Orbital Angular
Momentum for Wireless Communications", IEEE
WIRELESS COMMUNICATIONS, COORDINATED
SCIENCE LABORATORY; DEPT. ELECTRICAL
AND COMPUTER ENGINEERING; UNIVERSITY
OF ILLINOIS AT URBANA-CHAMPAIGN, US, vol.
26, no. 1, 1 February 2019 (2019-02-01), pages
100 - 107, XP011709538, ISSN: 1536-1284,
[retrieved on 20190212], DOI: 10.1109/
MWC.2017.1700370

## Description

### TECHNICAL FIELD

This application relates to the field of communication technologies, and in particular, to an OAM-based communication method, a related device, and a computer-readable storage medium.

### BACKGROUND

According to a classical electromagnetic wave theory, an electromagnetic wave carries not only a linear momentum along a propagation direction, but also an angular momentum perpendicular to the propagation direction. The angular momentum includes a spin angular momentum (SAM, Spin angular momentum) that describes a polarization status and an orbital angular momentum (OAM, Orbital angular momentum) that describes a spiral phase structure.

A phase factor $e^{il\varphi}$ is added to a normal radio electromagnetic wave. In this case, a wavefront of the radio electromagnetic wave no longer has a planar structure, but rotates around a propagation direction of a beam and is changed into a spiral phase wavefront structure. This process may be expressed as $U(r,\varphi) = A(r)e^{il\varphi}$, where A(r) indicates an amplitude of the electromagnetic wave, r indicates a radiation distance from a center axis of the beam, $\varphi$ indicates an azimuth, and $l$ indicates an OAM modality of the electromagnetic wave. The OAM modality $l$ of the electromagnetic wave is an unrestricted integer and corresponds to a wavefront phase change when the electromagnetic wave rotates around a propagation axis by $2\pi l$. Electromagnetic waves with different OAM modalities are orthogonal to each other. The spiral phase factor $e^{il\varphi}$ determines a spatial phase distribution structure of a spiral beam, and spiral beams with different OAM modalities $l$ have different spatial structures. Therefore, it is proposed in the industry that electromagnetic waves with different OAM modalities may be multiplexed to transmit information. Orthogonality between OAM electromagnetic waves helps greatly increase a capacity of a communication system. However, how to specifically multiplex electromagnetic waves with different OAM modalities to transmit information in a communication system is still under researches and discussions.

Documents WO 2019/192303 A1, US 2017/086165 A1, US 2016/338005 A1, WO 2019/030938 A1, and US 2016/270028 A1 disclose the transmission of a paging configuration.

Documents US 2017/117626 A1, WO 2019/186222 A1 and Cheng Wenchi et al.: "Orbital Angular Momentum for Wireless Communications", IEEE Wireless Communications, 1 February 2019, disclose the general concept of using the orbital angular momentum for wireless communications.

### SUMMARY

This application provides an OAM-based communication method, a related device, and a computer-readable storage medium.

The present invention is defined by the independent claims.

A first aspect of this application provides an OAM-based communication method, including:

For example, when a core network device needs to page a user terminal, the core network device may send a paging message to an access network device, and the access network device (for example, a base station) receives the paging message from a core network, where the paging message carries a user terminal category or a user terminal downlink category. The access network device sends a paging indication message to the user terminal, where the paging indication message carries a quantity of OAM modalities of a paging channel, the quantity of OAM modalities of the paging channel is less than or equal to a maximum quantity of downlink OAM modalities supported by the user terminal, and the maximum quantity of downlink OAM modalities supported by the user terminal can be determined based on the user terminal category or the user terminal downlink category.

Specifically, for example, after receiving the paging message, the access network device may determine, based on the user terminal category or the user terminal downlink category that is carried in the paging message, the maximum quantity of downlink OAM modalities supported by the user terminal, select an appropriate quantity of OAM modalities of a paging channel within a range of the maximum quantity of downlink OAM modalities supported by the user terminal, and send the paging indication message that carries the selected quantity of OAM modalities of the paging channel to the user terminal, to notify the user terminal that the user terminal can demodulate data in the paging channel based on the quantity of OAM modalities of the paging channel.

It can be learned that, in the foregoing example solution, the access network device (for example, the base station) receives the paging message sent by the core network, and may obtain the user terminal category or the user terminal downlink category that is carried in the paging message, the user terminal category or the user terminal downlink category may be used to determine the maximum quantity of downlink OAM modalities supported by the user terminal, and the access network device may select an appropriate quantity of OAM modalities as the quantity of OAM modalities of the paging channel based on a maximum quantity of uplink OAM modalities. The foregoing solution enables the access network device to select an appropriate quantity of OAM modalities for the paging channel based on the user terminal category or the user terminal downlink category, and notify the user terminal of the quantity of OAM modalities. This helps enable the user terminal to be more likely to demodulate data in the paging channel based on a more appropriate quantity of OAM modalities of the paging channel, thereby helping improve accuracy and reliability of data transmission.

For example, the user terminal downlink category (UE DL Category) includes one or more of the following characteristics: a maximum downlink transmission rate, whether 64QAM (Quadrature Phase Shift Keying, quadrature phase shift keying) is supported in downlink, a maximum quantity of downlink OAM modalities, or the like.

The user terminal category (UE Category) may include one or more of the following characteristics: a maximum downlink transmission rate, a maximum quantity of layers supported in downlink spatial multiplexing, a maximum quantity of downlink OAM modalities, a maximum uplink transmission rate, whether 64QAM is supported in uplink, a maximum quantity of uplink OAM modalities, or the like.

It is found through research that, in an OAM-based communication system, a maximum transmission rate is related to a quantity of OAM modalities supported, in addition to a modulation order supported, a quantity of carriers supported, a maximum quantity of multiple-input multiple-output layers supported, and the like. The following examples describe some possible manners of calculating the maximum transmission rate.

For example,

$$\text{Max Data Rate-1} = \sum_{l1=1}^{L1} \sum_{j1=1}^{J1} \left( v_{Layers}^{(j1)} \cdot Q_m^{(j1)} \cdot f^{(j1)} \cdot R_{\max} \cdot \frac{N_{PRB}^{BW(j1),\mu} \cdot 12}{T_s^{\mu}} \cdot \left(1 - OH^{(j1)}\right) \right)$$

, where

Max Data Rate-1 indicates a maximum downlink transmission rate, L1 indicates a quantity of downlink OAM modalities supported by the access network device, J1 indicates a quantity of downlink carriers supported by the access network device, $v_{Layers}^{(j1)}$ indicates maximum quantities of multiple-input multiple-output layers supported by different downlink carriers, $Q_m^{(j1)}$ indicates maximum modulation orders supported by different downlink carriers, $f^{(j1)}$ indicates adjustable factors of different downlink carriers, $R_{\max}$ indicates a conversion constant, $N_{PRB}^{BW(j1),\mu}$ indicates quantities of physical resource blocks supported by corresponding bandwidth of different downlink carriers, $OH^{(j1)}$ indicates overhead values of different downlink carriers, and $T_s^{\mu}$ indicates average orthogonal frequency division multiplexing (OFDM, Orthogonal Frequency Division Multiplexing) symbol duration.

For another example,

$$\text{Max Data Rate-2} = \sum_{l2=1}^{L2} \sum_{j2=1}^{J2} \left( v_{Layers}^{(j2)} \cdot Q_m^{(j2)} \cdot f^{(j2)} \cdot R_{\max} \cdot \frac{N_{PRB}^{BW(j2),\mu} \cdot 12}{T_s^{\mu}} \cdot \left(1 - OH^{(j2)}\right) \right)$$

,where Max Data Rate-2 indicates a maximum uplink transmission rate, L2 indicates a quantity of uplink OAM modalities supported by the user terminal, J2 indicates a quantity of uplink carriers supported by the user terminal, $v_{Layers}^{(j2)}$ indicates maximum quantities of multiple-input multiple-output layers supported by different uplink carriers, $Q_m^{(j2)}$ indicates maximum modulation orders supported by different uplink carriers, $f^{(j2)}$ indicates adjustable factors of different uplink carriers, $R_{\max}$ indicates a conversion constant, $N_{PRB}^{BW(j2),\mu}$ indicates quantities of physical resource blocks supported by corresponding bandwidth of different uplink carriers, $T_s^{\mu}$ indicates average orthogonal frequency division multiplexing OFDM symbol duration, and $OH^{(j2)}$ indicates overhead values of different uplink carriers.

A second aspect of this application provides an OAM-based communication method, including: A user terminal receives a paging indication message from an access network device, where the paging indication message carries a quantity of OAM modalities of a paging channel. The user terminal demodulates data in the paging channel based on the quantity of OAM modalities of the paging channel. The quantity of OAM modalities of the paging channel is less than a maximum quantity of downlink OAM modalities supported by the user terminal.

It can be learned that, in the foregoing solution, the access network device may select an appropriate quantity of OAM modalities as the quantity of OAM modalities of the paging channel based on a maximum quantity of uplink OAM modalities supported by the terminal, and notify the user terminal of the quantity of OAM modalities, so that the user terminal can demodulate data in the paging channel based on a more appropriate quantity of OAM modalities of the paging channel that is indicated by the access network device, thereby helping improve accuracy and reliability of data transmission.

A third aspect of this application provides an OAM-based communication method, including: A user terminal generates a capability reporting message, where the capability reporting message carries an OAM modality capability indication, and the OAM modality capability indication indicates an OAM modality capability supported by the user terminal. The user terminal sends the capability reporting message to an access network device.

For example, the OAM modality capability indication includes one or more of the following information: a set of uplink OAM modalities supported by the user terminal, a set of downlink OAM modalities supported by the user terminal, a maximum quantity of uplink OAM modalities supported by the user terminal and whether an uplink negative modality is supported, a maximum quantity of downlink OAM modalities supported by the user terminal and whether a downlink negative modality is supported, an uplink OAM modality initial value and an uplink OAM modality interval supported by the user terminal, or a downlink OAM modality initial value and a downlink OAM modality interval supported by the user terminal.

The capability reporting message is used to respond to a capability query request from the access network device (that is, the user terminal reports the OAM modality capability at the request of the access network device). In addition, the user terminal also actively reports the OAM modality capability of the user terminal to the access network device.

It can be learned that, in the foregoing example solution, the user terminal reports the OAM modality capability supported by the user terminal to the access network device. This helps enable the access network device to learn of OAM modality capabilities (for example, quantities of OAM modalities supported) of different user terminals, and may further implement more appropriate scheduling and transmission based on the OAM modality capabilities of the user terminals in a subsequent communication process. This helps implement multiplexing of different OAM modalities to increase a system capacity.

A fourth aspect of this application provides an OAM-based communication method, including: When an access network device wants to learn of an OAM modality capability supported by a user terminal, the access network device may send a capability query request to the user terminal. An access network device receives a capability reporting message that comes from the user terminal and that is used to respond to the capability query request, where the capability reporting message carries an OAM modality capability indication, and the OAM modality capability indication indicates the OAM modality capability supported by the user terminal.

For example, the OAM modality capability indication includes one or more of the following information: a set of uplink OAM modalities supported by the user terminal, a set of downlink OAM modalities supported by the user terminal, a maximum quantity of uplink OAM modalities supported by the user terminal and whether an uplink negative modality is supported, a maximum quantity of downlink OAM modalities supported by the user terminal and whether a downlink negative modality is supported, an uplink OAM modality initial value and an uplink OAM modality interval supported by the user terminal, or a downlink OAM modality initial value and a downlink OAM modality interval supported by the user terminal.

In addition, the access network device may alternatively not actively request the user equipment to report the OAM modality capability supported by the user terminal, but the user terminal may actively report the OAM modality capability of the user terminal to the access network device. In this case, the access network device may not send a capability query request to the user terminal.

It can be learned that, in the foregoing example solution, the user terminal reports, at the request of the access network device, the OAM modality capability supported by the user terminal to the access network device. This helps enable the access network device to learn of OAM modality capabilities of different user terminals (for example, quantities of OAM modalities supported by the user terminals), and may further implement more appropriate scheduling and transmission based on the OAM modality capabilities of the user terminals in a subsequent communication process. This helps implement multiplexing of different OAM modalities to increase a system capacity.

A fifth aspect of this application provides an access network device, including:

a receiving unit, configured to receive a paging message from a core network, where the paging message carries a user terminal category or a user terminal downlink category; and
a sending unit, configured to send a paging indication message to a user terminal, where the paging indication message carries a quantity of OAM modalities of a paging channel, the quantity of OAM modalities of the paging channel is less than or equal to a maximum quantity of downlink OAM modalities of the user terminal, and a maximum quantity of OAM modalities of the user terminal can be determined based on the user terminal category or the user terminal downlink category.

For details about function implementation of each functional unit of the access network device provided in the fifth aspect, refer to related detailed descriptions of the method provided in the first aspect. Details are not described herein again.

A sixth aspect of this application provides a user terminal. The user terminal may include:

a communication unit, configured to receive a paging indication message from an access network device, where the paging indication message carries a quantity of OAM modalities of a paging channel, and the quantity of OAM modalities of the paging channel is less than or equal to a maximum quantity of downlink OAM modalities supported by the user equipment; and

a paging processing unit, configured to demodulate, by the user terminal, data in the paging channel based on the quantity of OAM modalities of the paging channel.

For details about function implementation of each functional unit of the user terminal provided in the sixth aspect, refer to related detailed descriptions of the method provided in the second aspect. Details are not described herein again.

A seventh aspect of this application provides a user terminal. The user terminal may include:

a generation unit, configured to generate a capability reporting message, where the capability reporting message carries an OAM modality capability indication, and the OAM modality capability indication indicates an OAM modality capability supported by the user terminal; and

a communication unit, configured to send the capability reporting message to an access network device.

For example, the OAM modality capability indication includes one or more of the following information: a set of uplink OAM modalities supported by the user terminal, a set of downlink OAM modalities supported by the user terminal, a maximum quantity of uplink OAM modalities supported by the user terminal and whether an uplink negative modality is supported, a maximum quantity of downlink OAM modalities supported by the user terminal and whether a downlink negative modality is supported, an uplink OAM modality initial value and an uplink OAM modality interval supported by the user terminal, or a downlink OAM modality initial value and a downlink OAM modality interval supported by the user terminal.

For details about function implementation of each functional unit of the user terminal provided in the seventh aspect, refer to related detailed descriptions of the method provided in the third aspect. Details are not described herein again.

An eighth aspect of this application provides an access network device. The access network device may include:

a sending unit, configured to send a capability query request to a user terminal; and

a receiving unit, configured to receive a capability reporting message that is used to respond to the capability query request, where the capability reporting message carries an OAM modality capability indication, and the OAM modality capability indication indicates an OAM modality capability supported by the user terminal.

For example, the OAM modality capability indication includes one or more of the following information: a set of uplink OAM modalities supported by the user terminal, a set of downlink OAM modalities supported by the user terminal, a maximum quantity of uplink OAM modalities supported by the user terminal and whether an uplink negative modality is supported, a maximum quantity of downlink OAM modalities supported by the user terminal and whether a downlink negative modality is supported, an uplink OAM modality initial value and an uplink OAM modality interval supported by the user terminal, or a downlink OAM modality initial value and a downlink OAM modality interval supported by the user terminal.

For details about function implementation of each functional unit of the access network device provided in the eighth aspect, refer to related detailed descriptions of the method provided in the fourth aspect. Details are not described herein again.

A ninth aspect of this application provides a user terminal, including a processor and a memory that are coupled to each other. The processor is configured to invoke a computer program stored in the memory, to perform some or all steps of any method that may be performed by the user terminal in embodiments of this application.

A tenth aspect of this application provides an access network device, including a processor and a memory that are coupled to each other. The processor is configured to invoke a computer program stored in the memory, to perform some or all steps of any method that may be performed by the access network device in embodiments of this application.

An eleventh aspect of this application provides a computer-readable storage medium. The computer-readable storage medium stores a computer program. When the computer program is executed by hardware (for example, a processor), some or all steps of any method that may be performed by an access network device in embodiments of this application can be performed.

A twelfth aspect of this application provides a computer-readable storage medium. The computer-readable storage medium stores a computer program. When the computer program is executed by hardware (for example, a processor), some or all steps of any method that may be performed by an access network device in embodiments of this application can be performed.

A thirteenth aspect of this application provides a communication apparatus (the communication apparatus may be applied to an access network device or a user terminal). The communication apparatus includes at least one input end, a signal processor, and at least one output end. The signal processor is configured to perform some or all steps of any method that may be performed by the access network device or the user terminal in embodiments of this application.

A fourteenth aspect of this application provides a communication apparatus (the communication apparatus may be applied to an access network device or a user terminal). The communication apparatus includes an input interface circuit, a logic circuit, and an output interface circuit. The logic circuit is configured to perform some or all steps of any method that may be performed by the access network device or the user terminal in embodiments of this application.

## BRIEF DESCRIPTION OF DRAWINGS

The following briefly describes the accompanying drawings required for describing embodiments or the conventional technology.

FIG. 1-A is a schematic diagram of an architecture of an OAM communication system according to an embodiment of this application;

FIG. 1-B is a schematic diagram of an architecture of a communication system according to an embodiment of this application;

FIG. 1-C is a schematic diagram of a satellite communication scenario according to an embodiment of this application;

FIG. 1-D is a schematic diagram of an electromagnetic wave with a spiral non-planar wavefront structure according to an embodiment of this application;

FIG. 1-E is a schematic diagram of array element arrangement according to an embodiment of this application;

FIG. 2 is a schematic diagram of an OAM-based communication method according to an embodiment of this application;

FIG. 3 is a schematic diagram of another OAM-based communication method according to an embodiment of this application;

FIG. 4 is a schematic diagram of another OAM-based communication method according to an embodiment of this application;

FIG. 5-A is a schematic diagram of another OAM-based communication method according to an embodiment of this application;

FIG. 5-B is a schematic diagram of mapping a processed bit sequence to a radio frame according to an embodiment of this application;

FIG. 5-C is a schematic diagram of a QPSK modulated symbol table according to an embodiment of this application;

FIG. 5-D is a schematic diagram of mapping a symbol to a radio frame according to an embodiment of this application;

FIG. 6-A is a schematic diagram of another OAM-based communication method according to an embodiment of this application;

FIG. 6-B is a schematic diagram of a first field indication $\Delta l$ according to an embodiment of this application;

FIG. 6-C is a schematic diagram of a first field indication $\Delta l$ and a subcarrier spacing according to an embodiment of this application;

FIG. 7 is a schematic diagram of a structure of another user terminal according to an embodiment of this application;

FIG. 8 is a schematic diagram of a structure of another access network device according to an embodiment of this application;

FIG. 9 is a schematic diagram of a structure of another user terminal according to an embodiment of this application;

FIG. 10 is a schematic diagram of a structure of another access network device according to an embodiment of this application;

FIG. 11 is a schematic diagram of a structure of an access network device according to an embodiment of this application;

FIG. 12 is a schematic diagram of a structure of a user terminal according to an embodiment of this application;

FIG. 13 is a schematic diagram of a structure of a communication apparatus according to an embodiment of this application; and

FIG. 14 is a schematic diagram of a structure of another communication apparatus according to an embodiment of this application.

## DESCRIPTION OF EMBODIMENTS

The following describes the technical solutions of embodiments of this application with reference to the accompanying drawings in embodiments of this application.

In the specification, claims, and accompanying drawings of this application, terms "first", "second", and the like are intended to distinguish between different objects but do not indicate a particular order.

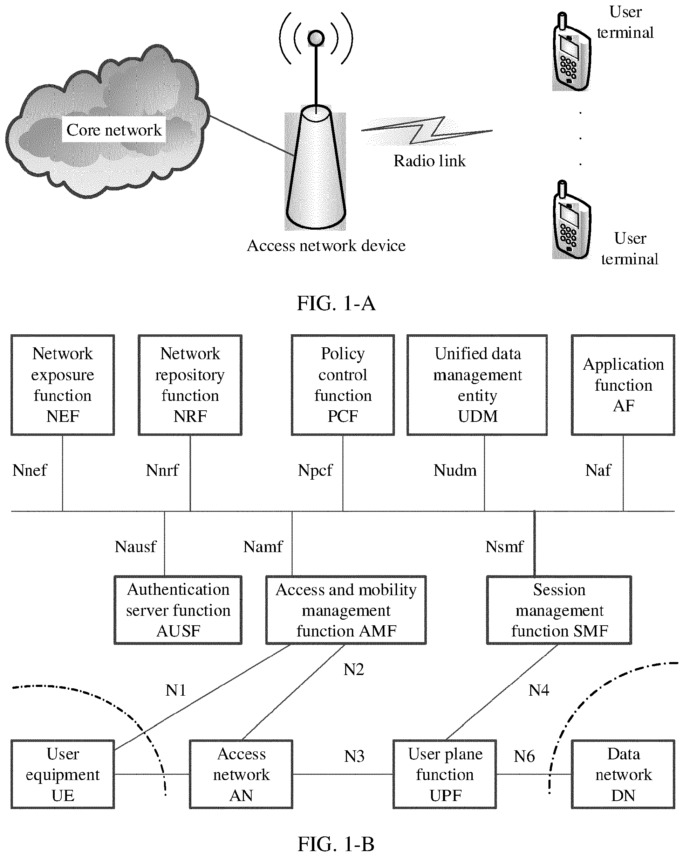

FIG. 1-A is a schematic diagram of an architecture of an OAM communication system. The OAM communication system may include an access network device (for example, a base station) and a user terminal, and further includes a core network and the like. The access network device provides a communication service for the user terminal. For example, the user terminal includes a terminal device such as a smartphone, a smartwatch, or a tablet computer. The access network device transmits downlink data to the user terminal. The data is encoded through channel encoding, and data obtained through channel encoding is transmitted to the user terminal after constellation modulation. The transmission is performed by using an OAM wave. The user terminal may transmit uplink data to the access network device. The uplink data may also be encoded through channel encoding, and encoded data is transmitted to the access network device after constellation modulation.

For example, the OAM communication system is applied to a 5G network, a 4G network, a 6G network, a satellite communication network, or another network in a complex form.

FIG. 1-B is a schematic diagram of an example of a 5G network architecture according to an embodiment of this application. In a 5G network, some function network elements (for example, a mobility management entity (MME, mobility management entity)) in a 4G network are split, and a service-based architecture is defined. In the network architecture shown in FIG. 1-B, a function similar to that of the MME in the 4G network is split into an access and mobility management function (AMF, Access and Mobility Management Function), a session management function (SMF, Session Management Function), and the like.

The following describes some other related network elements/entities.

A user terminal (user equipment, UE) accesses a data network (DN, data network) or the like by accessing an operator network, and uses a service provided by an operator or a third party on the DN.

For ease of description, the user terminal, the user equipment, a terminal device, or a terminal in embodiments of this application may be collectively referred to as UE. In other words, unless otherwise specified, the UE described below in embodiments of this application may be replaced with the user terminal, the user equipment, the terminal device, or the terminal. Certainly, these terms may also be interchanged.

The access and mobility management function (AMF) is a control plane function in a 3GPP network, and is mainly responsible for access control and mobility management when the UE accesses the operator network. A security anchor function (SEAF, Security Anchor Function) may be deployed in the AMF, or deployed in a device other than the AMF. FIG. 1-B shows an example in which the SEAF is deployed in the AMF. When the SEAF is deployed in the AMF, the SEAF and the AMF may be jointly referred to as an AMF.

The session management function (SMF) is a control plane function in the 3GPP network. The SMF is mainly responsible for managing a data packet (PDU, Packet Data Unit) session of the UE. The PDU session is a channel used to transmit a PDU, and the UE and the DN may send the PDU to each other by using the PDU session. The SMF is responsible for management tasks such as establishment, maintenance, and deletion of the PDU session.

The data network (DN, Data Network), also referred to as a packet data network (PDN, Packet Data Network), is a network located outside the 3GPP network. The 3GPP network may access a plurality of DNs, and a plurality of services provided by the operator or the third party may be deployed on the DN. For example, a DN is a private network of a smart factory, a sensor installed in a workshop of the smart factory plays a role of UE, and a control server of the sensor is deployed in the DN. The UE communicates with the control server. After obtaining an instruction from the control server, the UE may transfer collected data to the control server according to the instruction. For another example, a DN is an internal office network of a company, a terminal used by an employee of the company may play a role of UE, and the UE may access internal information and other resources of the company.

A unified data management (UDM, Unified Data Management) entity is also a control plane function in the 3GPP network. The UDM is mainly responsible for storing subscription data, a credential (credential), a permanent identifier (SUPI, Subscriber Permanent Identifier), and the like of a subscriber (UE) in the 3GPP network. The data may be used for authentication and authorization when the UE accesses the 3GPP network of the operator.

An authentication server function (AUSF, Authentication Server Function) is also a control plane function in the 3GPP network. The AUSF is mainly used for first-level authentication (namely, subscriber authentication in the 3GPP network).

A network exposure function (NEF, Network Exposure Function) is also a control plane function in the 3GPP network. The NEF is mainly responsible for exhibiting an external interface of the 3GPP network to the third party in a secure manner. When a function such as the SMF needs to communicate with a third-party network element, the NEF may serve as a relay for communication. The NEF can translate internal and external identifiers when serving as the relay. For example, when sending an SUPI of the UE from the 3GPP network to a third party, the NEF may translate the SUPI into a corresponding external identity (ID, identity). Conversely, when sending an external identity ID to the 3GPP network, the NEF may translate the external identity ID into a corresponding SUPI.

A network repository function (network repository function, NRF) is also a control-plane network element in the 3GPP network. The NR is mainly responsible for storing configuration service profiles (profiles) of accessible network functions (NFs), and providing network function discovery services for other network elements.

A user plane function (UPF, User Plane Function) is a gateway for communication between the 3GPP network and the DN.

A policy control function (PCF, Policy Control Function) is a control plane function in the 3GPP network, and is configured to provide a policy of a PDU session for the SMF. The policy may include charging, quality of service (QoS, Quality of Service), an authorization-related policy, and the like.

An access network (AN, access network) is a sub-network of the 3GPP network. To access the 3GPP network, the UE needs to first access the AN. In a radio access scenario, the AN is also referred to as a radio access network (RAN, Radio Access Network). Therefore, terms "RAN" and "AN" are usually used interchangeably.

The 3GPP network is a network that complies with 3GPP specifications. In FIG. 1-B, parts other than the UE and the DN may be considered as the 3GPP network. The 3GPP network is not limited to a 5G network defined by the 3GPP, but may further include a 2G network, a 3G network, and a 4G network. Usually, the 3GPP network is operated by the operator. In addition, in the architecture shown in FIG. 1-B, N1, N2, N3, N4, N6, and the like indicate reference points (Reference Points) between related entities or network functions. Nausf, Namf, and the like represent service-oriented interfaces of related network functions.

Certainly, the 3GPP network and a non-3GPP network may coexist, and some network elements in the 5G network may also be used in some non-5G networks.

In the future, terrestrial 5G will have a complete industry chain, a huge group of users, a flexible and efficient application service mode, and the like. Therefore, integrating a satellite communication system and the 5G network while complementing strength of each other to form a global seamless integrated comprehensive communication network of sea, land, space, and air to meet a plurality of ubiquitous service requirements of users is an important direction of communication development in the future.

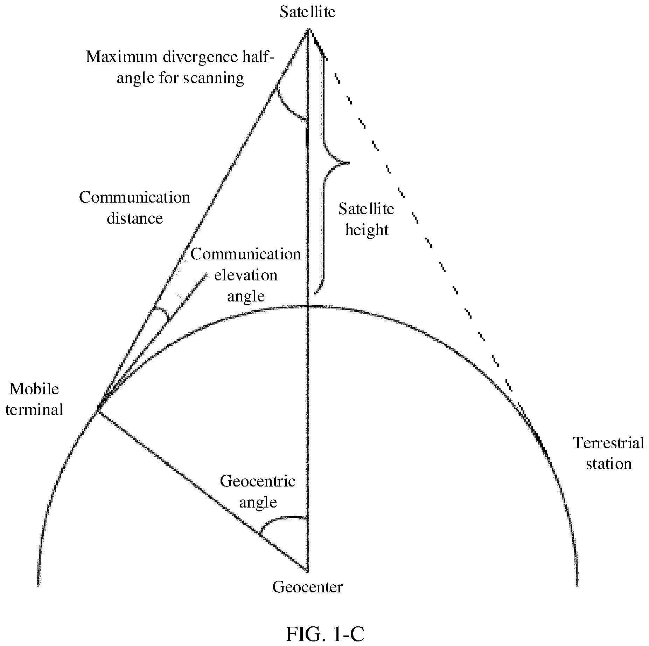

FIG. 1-C is a schematic diagram of an example of a satellite communication scenario. In a communication scenario in which a satellite has a signal processing capability or a satellite transparently forwards a user signal to a terrestrial base station to implement wide-area coverage, a protocol stack compatible with a 3GPP LTE/NR protocol may be used. A user terminal may be a common mobile terminal or a dedicated terminal, and a transmission process may comply with the LTE/NR protocol. The solutions discussed in this application are also applicable to a terrestrial mobile communication scenario defined in 3GPP LTE/NR, for example, a high-speed mobile communication scenario such as a high-speed railway or an aircraft, or a common low-speed mobile communication scenario.

For ease of understanding the technical solutions in embodiments of this application, the following briefly describes OAM-related technical knowledge included in embodiments of this application.

According to a classical electrodynamics theory, an electromagnetic wave has not only a linear momentum along a propagation direction, but also an angular momentum perpendicular to the propagation direction. The angular momentum includes a spin angular momentum (spin angular momentum, SAM) that describes a polarization status and an orbital angular momentum (orbital angular momentum, OAM) that describes a spiral phase structure.

Generally, a phase factor $e^{il\varphi}$ may be added to a radio electromagnetic wave whose wavefront has a planar structure, to obtain an electromagnetic wave that rotates around a propagation direction of a beam and whose wavefront has a spiral phase structure. The wavefront (wavefront) refers to a plane constituted by a mass point that starts to shift at a specific moment during propagation of the wave in a medium. Further, the electromagnetic wave that rotates around the propagation direction of the beam and whose wavefront has the spiral phase structure may be expressed as $U(r,\varphi) = A(r) e^{il\varphi}$, where $A(r)$ indicates an amplitude of the electromagnetic wave, r indicates a radiation distance from a center axis of the beam, $\varphi$ indicates an azimuth, and $l$ indicates a quantity of OAM modalities of the electromagnetic wave. $l$ is an unrestricted integer, and $l$ is a quantity of times that the spiral wavefront of the beam rotates by $2\pi$ when the beam propagates by one wavelength range along an axial direction. Electromagnetic waves with different quantities of OAM modalities are orthogonal to each other. Therefore, electromagnetic waves with different quantities of OAM modalities may be multiplexed to transmit information. Orthogonality between OAM electromagnetic waves greatly increases a capacity of a communication system.

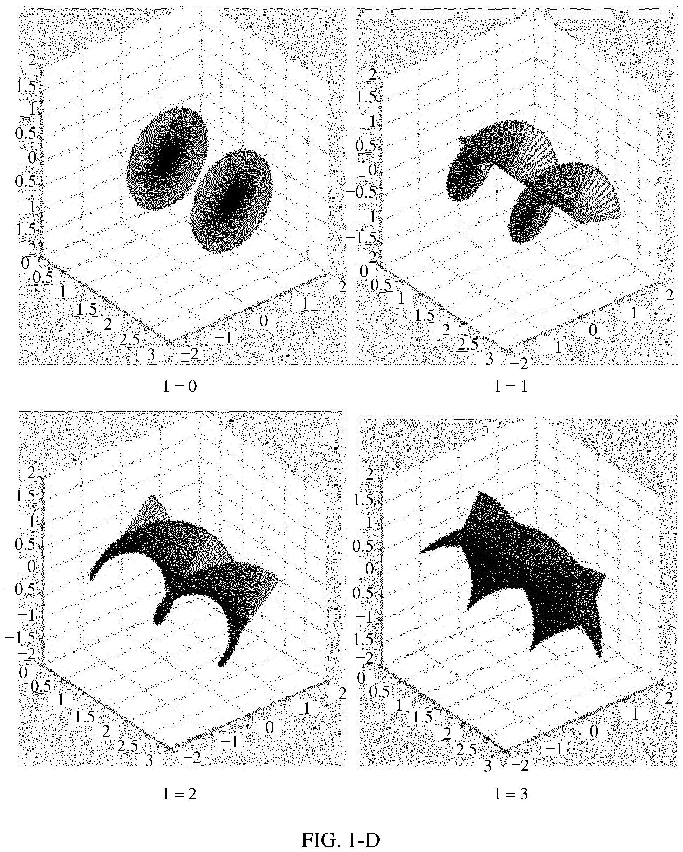

The spiral phase factor $e^{il\varphi}$ determines a spatial phase distribution structure of a spiral beam, and spiral beams corresponding to different quantities of OAM modalities have different spatial structures. FIG. 1-D is a schematic diagram of an electromagnetic wave with a spiral non-planar wavefront structure according to an embodiment of this application. FIG. 1-D shows, as examples, electromagnetic wave forms in which a quantity of OAM modalities $l$ is 0, a quantity of OAM modalities *l* is 1, a quantity of OAM modalities *l* is 2, and a quantity of OAM modalities *l* is 4. A phase factor in which a quantity of OAM modalities *l* is not 0 enables an electromagnetic wave to have a spiral non-planar wavefront structure.

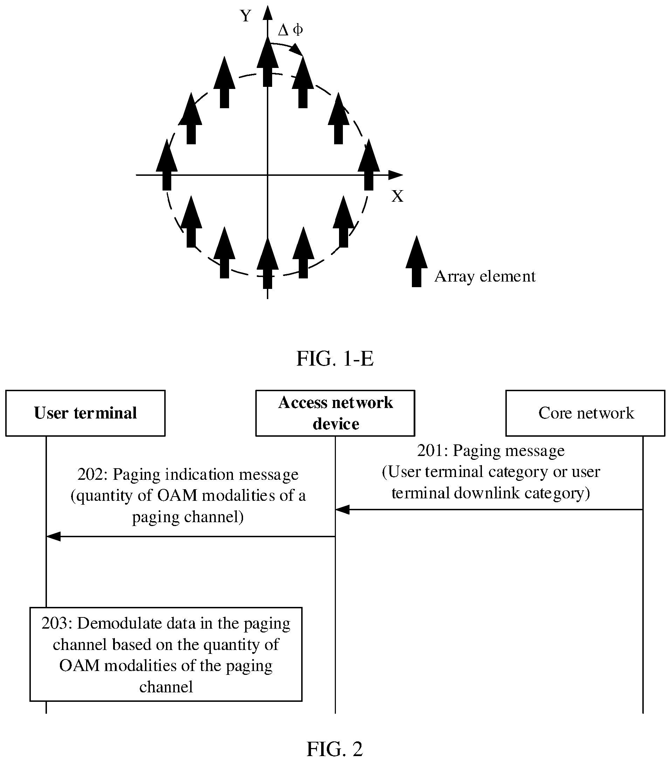

Further, an electromagnetic wave carrying an OAM is generated by using N identical array elements distributed on a circumference at equal spacings, and the array elements are dipole sub-antennas. FIG. 1-E is a schematic diagram of array element arrangement according to an embodiment of this application. As shown in FIG. 1-E, excitation feeding currents that have an equal amplitude and that have a phase difference of $\Delta\varphi = \frac{2\pi l}{N}$ are used for adjacent array elements, where *l* is a quantity of OAM modalities, N is a quantity of array elements, and the quantity of array elements determines a maximum value of a quantity of OAM modalities that can be generated.

Generally, to improve a diversity effect and reduce impact of multipath fading, a diversity technology may be used when a signal is transmitted. For example, a signal is mapped to a plurality of subframes of a radio frame (radio frame, RF) for transmission. In this transmission mode, only a same signal is repeatedly transmitted, or in other words, only a same electromagnetic wave is repeatedly transmitted. Further, these electromagnetic waves have a same electromagnetic field, wavelength, frequency, and the like, but these electromagnetic waves do not interact with each other during transmission. Therefore, the electromagnetic field is not enhanced, and signal fading in this transmission mode may be the same as signal fading during transmission of a single signal.

In some generation methods related to an OAM wave, for example, a beam carrying an OAM AM may be generated by using a phased circular array with N array elements, and a dipole sub-antenna serves as an antenna array element. Array elements are evenly distributed on a circumference at equal spacings, and a same signal is fed to the array elements. A specific phase difference is maintained between two adjacent array elements. An OAM wave whose OAM modality is *l* can be generated based on the circular array antenna structure. However, for user terminals, different types of user terminals have different cost requirements and different capabilities. Therefore, if how to negotiate with a communication system on an OAM capability of a user terminal and how the communication system performs appropriate scheduling and transmission based on the OAM capability of the user terminal are not considered, service stability of the OAM communication system is very likely to be affected.

The following describes some feasible solutions.

FIG. 2 is a schematic flowchart of an OAM-based communication method according to an embodiment of this application. The solution in this embodiment is mainly applied to a paging scenario.

As shown in the example in FIG. 2, the OAM-based communication method may include the following steps.

201: When a core network needs to page a user terminal, the core network may send a paging message to an access network device, where the paging message carries a user terminal category or a user terminal downlink category.

202: The access network device receives the paging message from the core network, and sends a paging indication message to the user terminal.

The paging indication message carries a quantity of OAM modalities of a paging channel. The quantity of OAM modalities of the paging channel is less than or equal to a maximum quantity of downlink OAM modalities supported by the user terminal. The maximum quantity of OAM modalities supported by the user terminal can be determined based on the user terminal category or the user terminal downlink category.

203: The user terminal receives the paging indication message from the access network device, where the paging indication message carries the quantity of OAM modalities of the paging channel, and the user terminal demodulates data in the paging channel based on the quantity of OAM modalities of the paging channel.

For example, the user terminal downlink category (UE DL Category) includes one or more of the following characteristics: a maximum downlink transmission rate supported, whether 64QAM (Quadrature Phase Shift Keying, quadrature phase shift keying) is supported in downlink, a maximum quantity of downlink OAM modalities supported, or the like.

For example, the user terminal category (UE Category) may include one or more of the following characteristics: a maximum downlink transmission rate supported, a maximum quantity of layers supported in downlink spatial multiplexing, a maximum quantity of downlink OAM modalities supported, a maximum uplink transmission rate supported, whether 64QAM is supported in uplink, a maximum quantity of uplink OAM modalities supported, or the like.

It is found through research that, in an OAM-based communication system, a maximum transmission rate is related to a quantity of OAM modalities supported, in addition to a modulation order supported, a quantity of carriers supported, a maximum quantity of multiple-input multiple-output layers supported, and the like. The following examples describe some possible manners of calculating the maximum transmission rate.

For example,

$$\text{Max Data Rate-1} = \sum_{l1=1}^{L1} \sum_{j1=1}^{J1} \left( v_{Layers}^{(j1)} \cdot Q_m^{(j1)} \cdot f^{(j1)} \cdot R_{\max} \cdot \frac{N_{PRB}^{BW(j1),\mu} \cdot 12}{T_s^{\mu}} \cdot \left(1 - OH^{(j1)}\right) \right)$$

, where Max Data Rate-1 indicates a maximum downlink transmission rate, L1 indicates a quantity of downlink OAM modalities supported by the access network device, J1 indicates a quantity of downlink carriers supported by the access network device, $v_{Layers}^{(j1)}$ indicates maximum quantities of multiple-input multiple-output layers supported by different downlink carriers, $Q_m^{(j1)}$ indicates maximum modulation orders supported by different downlink carriers, $f^{(j1)}$ indicates adjustable factors of different downlink carriers, $R_{max}$ indicates a conversion constant, $N_{PRB}^{BW(j1),\mu}$ indicates quantities of physical resource blocks supported by corresponding bandwidth of different downlink carriers, $OH^{(j1)}$ indicates overhead values of different downlink carriers, and $T_s^\mu$ indicates average orthogonal frequency division multiplexing (OFDM, Orthogonal Frequency Division Multiplexing) symbol duration.

For another example,

$$\text{Max Data Rate-2} = \sum_{l2=1}^{L2} \sum_{j2=1}^{J2} \left( v_{Layers}^{(j2)} \cdot Q_m^{(j2)} \cdot f^{(j2)} \cdot R_{max} \cdot \frac{N_{PRB}^{BW(j2),\mu} \cdot 12}{T_s^\mu} \cdot \left(1 - OH^{(j2)}\right) \right)$$

, where

Max Data Rate-2 indicates a maximum uplink transmission rate, L2 indicates a quantity of uplink OAM modalities supported by the user terminal, J2 indicates a quantity of uplink carriers supported by the user terminal, $v_{Layers}^{(j2)}$ indicates maximum quantities of multiple-input multiple-output layers supported by different uplink carriers, $Q_m^{(j2)}$ indicates maximum modulation orders supported by different uplink carriers, $f^{(j2)}$ indicates adjustable factors of different uplink carriers, $R_{max}$ indicates a conversion constant, $N_{PRB}^{BW(j2),\mu}$ indicates quantities of physical resource blocks supported by corresponding bandwidth of different uplink carriers, $T_s^\mu$ indicates average orthogonal frequency division multiplexing OFDM symbol duration, and $OH^{(j2)}$ indicates overhead values of different uplink carriers.

Certainly, a manner of calculating the maximum transmission rate is not limited to the foregoing example manners, and some parameters may be alternatively added and/or replaced to perform calculation.

It can be learned that, in the foregoing example solution, the access network device (for example, a base station) receives the paging message sent by the core network, and may obtain the user terminal category or the user terminal downlink category that is carried in the paging message, and determine, based on the user terminal category or the user terminal downlink category, the maximum quantity of downlink OAM modalities supported by the user terminal, and the base station may select, based on a maximum quantity of uplink OAM modalities, an appropriate OAM modality to send the paging indication message to the user terminal. The foregoing solution enables the access network device to select, based on the user terminal category or a user terminal uplink category, an appropriate OAM modality to send the paging indication information, thereby helping improve accuracy and reliability of data transmission.

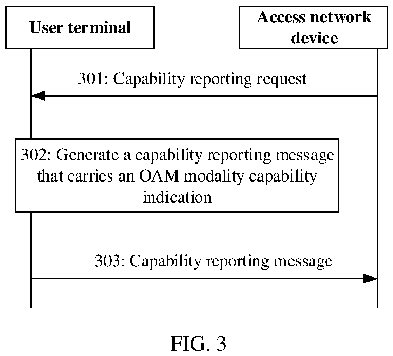

FIG. 3 is a schematic flowchart of another OAM-based communication method according to an embodiment of this application. The solution in this embodiment is mainly applied to an OAM modality capability reporting scenario.

As shown in the example in FIG. 3, the another OAM-based communication method may include the following steps.

301: An access network device sends a capability query request to a user terminal.

The access network device may send the capability query request to the user terminal in an uplink-downlink synchronization process of the user terminal or after uplink-downlink synchronization. The capability query request may be used to indicate the user terminal to report an OAM modality supported by the user terminal, and the like.

For example, the access network device may send the capability query request to the user terminal after receiving a radio resource control (RRC, Radio Resource Control) connection setup request from the user terminal.

302: The user terminal generates a capability reporting message after receiving the capability query request from the access network device, where the capability reporting message carries an OAM modality capability indication, and the OAM modality capability indication indicates an OAM modality capability supported by the user terminal.

303: The user terminal sends the capability reporting message to the access network device.

Correspondingly, the access network device may receive the capability reporting message that comes from the user terminal and that is used to respond to the capability query request, where the capability reporting message carries the OAM modality capability indication, and the OAM modality capability indication indicates the OAM modality supported by the user terminal. Based on this, the access network device may learn of the OAM modality capability supported by the user terminal, and the access network device may further report, to a core network, the OAM modality capability supported by the user terminal.

In this embodiment, the user terminal mainly reports, at the request of the access network device, the OAM modality capability supported by the user terminal to the access network device. Certainly, the user terminal may alternatively actively report the OAM modality capability supported by the user terminal. A specific implementation in this scenario is not described in detail herein.

For example, the OAM modality capability indication includes one or more of the following information: a set of uplink OAM modalities supported by the user terminal, a set of downlink OAM modalities supported by the user terminal, a maximum quantity of uplink OAM modalities supported by the user terminal and whether an uplink negative modality is supported, a maximum quantity of downlink OAM modalities supported by the user terminal and whether a downlink negative modality is supported, an uplink OAM modality initial value and an uplink OAM modality interval supported by the user terminal, or a downlink OAM modality initial value and a downlink OAM modality interval supported by the user terminal.

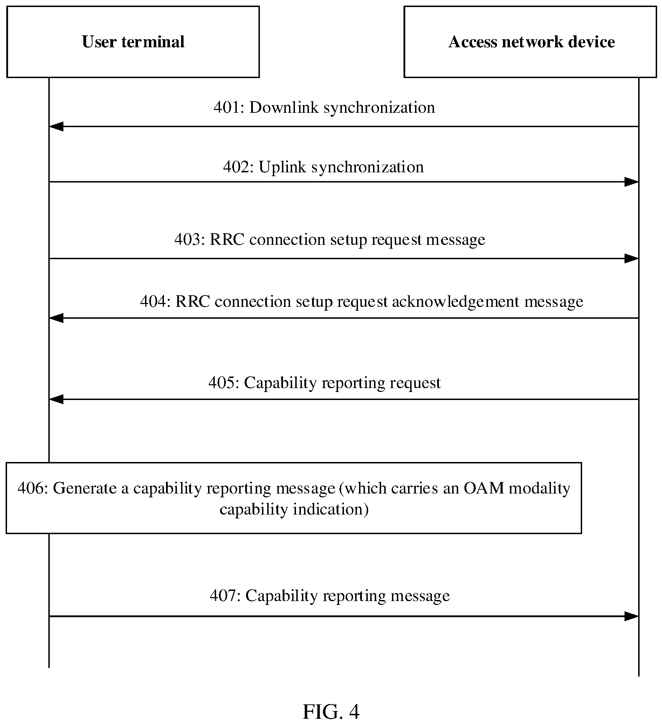

FIG. 4 is a schematic flowchart of another OAM-based communication method according to an embodiment of this application. The solution in this embodiment is mainly applied to an OAM modality capability reporting scenario.

As shown in the example in FIG. 4, the another OAM-based communication method may include the following steps.

401: A user terminal performs downlink synchronization with an access network device.

The access network device may send a synchronization signal to the user terminal by using a default quantity of OAM modalities. The user terminal receives the synchronization signal sent by the access network device, and performs downlink synchronization with the access network device based on the synchronization signal.

402: The user terminal performs uplink synchronization with an access network device.

The user terminal may select an appropriate quantity of OAM modalities to send an uplink random access signal. The quantity of OAM modalities may be selected based on a random access preamble, or based on a time domain location and a frequency domain location for sending the random access signal. The access network device receives the random access signal of the user terminal, and sends a random access response to the user terminal. The random access response carries a timing advance, and the random access response may be sent by using a quantity of OAM modalities that is the same as the quantity of OAM modalities in the downlink synchronization signal, or by using a quantity of OAM modalities that has a specific OAM modality interval from the quantity of OAM modalities in the downlink synchronization signal. The user terminal performs uplink synchronization based on the random access response from the access network device.

403: The user terminal sends an RRC connection setup request message to the access network device. The RRC connection setup request message may be sent by using a quantity of OAM modalities that is the same as the quantity of OAM modalities in the uplink random access signal, or by using a quantity of OAM modalities that has a specific OAM modality interval from the quantity of OAM modalities in the uplink random access signal. Alternatively, the RRC connection setup request message is sent by using a quantity of OAM modalities that is indicated by the access network device.

404: The access network device receives the RRC connection setup request message from the user terminal, and the access network device sends an RRC connection setup request acknowledgement message to the user terminal to respond to the RRC connection setup request message of the user terminal, so as to complete RRC connection setup for the user terminal.

405: The access network device sends a capability query request to the user terminal, where the capability query request may be used to indicate the user terminal to report an OAM modality supported by the user terminal, and the like.

The capability query request may be carried in the RRC connection setup request acknowledgement message, or the capability query request may be another message independent of the RRC connection setup request acknowledgement message.

The access network device may select, based on a maximum quantity of OAM modalities supported by the access network device, an appropriate quantity of OAM modalities to send the capability query request. For example, the access network device may indicate, in a downlink control message, a quantity of OAM modalities used for the capability query request.

406: The user terminal generates a capability reporting message after receiving the capability query request from the access network device, where the capability reporting message carries an OAM modality capability indication, and the OAM modality capability indication indicates an OAM modality capability supported by the user terminal.

407: The user terminal sends the capability reporting message to the access network device.

Correspondingly, the access network device may receive the capability reporting message that comes from the user terminal and that is used to respond to the capability query request. The capability reporting message carries the OAM modality capability indication, and the OAM modality capability indication indicates the OAM modality capability supported by the user terminal. Based on this, the access network device may learn of the OAM modality capability supported by the user terminal, and the access network device may further report, to a core network, the OAM modality capability supported by the user terminal.

For example, the OAM modality capability indication includes one or more of the following information: a set of uplink OAM modalities supported by the user terminal, a set of downlink OAM modalities supported by the user terminal, a maximum quantity of uplink OAM modalities supported by the user terminal and whether an uplink negative modality is supported, a maximum quantity of downlink OAM modalities supported by the user terminal and whether a downlink negative modality is supported, an uplink OAM modality initial value and an uplink OAM modality interval supported by the user terminal, or a downlink OAM modality initial value and a downlink OAM modality interval supported by the user terminal.

Specifically, for example, a set of downlink OAM modalities supported by the user terminal may be recorded in an OAM modality list. For example, the UE supports two OAM modalities, and the OAM modality list reported by the user terminal may be expressed as $l = \{1,2\}$ or $l = \{-1,1\}$; or if the UE supports four OAM modalities, the OAM modality list reported by the user terminal may be expressed as $l = \{1,2,3,4\}$ or $\{-2,-1,1,2\}$, where l indicates an OAM modality value; and so on.

Specifically, for another example, the OAM modality supported by the user terminal may be represented by using an OAM modality initial value and an OAM modality interval that are supported by the UE. For example, if the quantity of OAM modalities supported by the UE is 4, an initial value of OAM modalities is 1, and the OAM modality interval $\Delta l$ is 1, the OAM modality supported by the UE is $l = \{1,2,3,4\}$. For example, if the quantity of OAM modalities supported by the UE is 4, an initial OAM modality is 1, and the OAM modality interval $\Delta l$ is 2, the value of OAM modalities supported by the UE is $l = \{1,3,5,7\}$; and so on.

For another example, the UE reports, in OAM capability reporting, a maximum quantity of OAM modalities supported by the UE and whether a negative modality is supported (or whether a negative modality is supported is specified in a protocol in a system). For example, the OAM modality interval is a default value 1. For example, the UE reports that the maximum quantity of OAM modalities supported is 2. If a negative modality is not supported, the quantity of OAM modalities supported by the UE is $l = \{1,2\}$; or if a negative modality is supported, the quantity of OAM modalities supported by the UE is $l = \{-1,1\}$. For example, the UE reports that the maximum quantity of OAM modalities supported is 4. If a negative modality is not supported, the quantity of OAM modalities supported by the UE is $l = \{1,2,3,4\}$; or if the UE supports a negative modality, the quantity of OAM modalities supported by the UE is $\{-2, -1,1,2\}$; and so on.

It can be learned that, in the foregoing example solution, the user terminal may report the OAM modality capability of the user terminal to the access network device after performing downlink synchronization and uplink synchronization, to respond to the UE capability query request of the access network device. The OAM modality capability of the user terminal may include a set of OAM modalities supported by the user terminal, or the maximum quantity of OAM modalities supported by the user terminal and whether a negative modality is supported, or the OAM modality initial value and the OAM modality interval that are supported by the user terminal. This solution helps enable the access network device to learn of OAM modality capabilities of different user terminals (for example, quantities of OAM modalities supported by the user terminals), so that the access network device can implement appropriate scheduling and transmission based on the OAM modalities supported by the user terminals in a subsequent communication process. This helps implement multiplexing of different OAM modalities to increase a system capacity.

The following describes some specific processes of OAM-based communication between an access network device and a user terminal as examples. These specific processes may be performed before or after the user terminal reports an OAM modality capability.

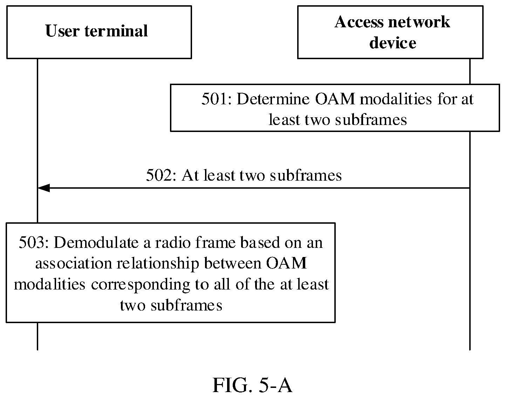

FIG. 5-A is a schematic diagram of another OAM-based communication method according to an embodiment of this application. The another OAM-based communication method may include the following steps.

501: An access network device determines OAM modalities for at least two subframes of a radio frame.

At least one symbol is mapped to each of the at least two subframes.

Further, the at least one symbol may be at least one complex symbol of a first signal. The complex symbol is a modulated symbol obtained through QPSK modulation. For example, a complex symbol is $\frac{1}{\sqrt{2}} - j \cdot \frac{1}{\sqrt{2}}$, where j is an imaginary unit.

Further, the first signal may be a first bit sequence transmitted in a BCH. The first signal includes at least one of the following: a system frame number (system frame number, SFN), a frequency channel number, bandwidth, a frequency, and a quantity of OAM modalities supported by a system. Further, the quantity of OAM modalities supported by the system is used to indicate a quantity of OAM modalities in an OAM modality sequence supported by the system. Specifically, for example, the quantity of OAM modalities supported by the system may be a quantity of OAM modalities corresponding to a first OAM modality sequence.

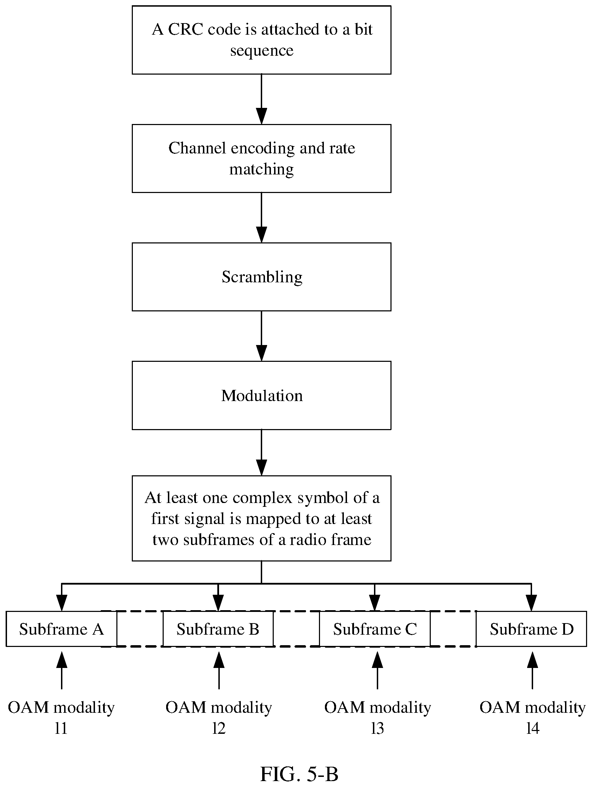

Further, FIG. 5-B is a schematic diagram of mapping a processed bit sequence to a radio frame according to an embodiment of this application. As shown in FIG. 5-B, it can be learned that the access network device generates a cyclic redundancy check (cyclic redundancy check, CRC) code based on the first bit sequence; the access network device attaches the CRC code to the first bit sequence to obtain a second bit sequence; the access network device performs channel encoding on the second bit sequence to obtain a third bit sequence, where the channel encoding includes one of the following: convolutional encoding, polar encoding, or a low-density parity-check code; the access network device performs rate matching on the third bit sequence to obtain a fourth bit sequence; and the access network device scrambles the fourth bit sequence by using a scrambling bit sequence to obtain a fifth bit sequence, where the scrambling bit sequence is generated based on a cell identification code, and different cell identification codes result in different scrambling bit sequences. For example, the fourth bit sequence is $b(i)$, where $b(i)$ is $b(0), \cdots, b(M_{bit} - 1)$, and $M_{bit}$ is a quantity of bits of the fourth bit sequence; the scrambling bit sequence is c(i); and the fifth bit sequence is $\tilde{b}(i)$. In this case, the fifth bit sequence may be expressed as $\tilde{b}(i) = (b(i) + c(i))mod\, 2$. Then the access network device modulates the fifth bit sequence to obtain the at least one complex symbol of the first signal.

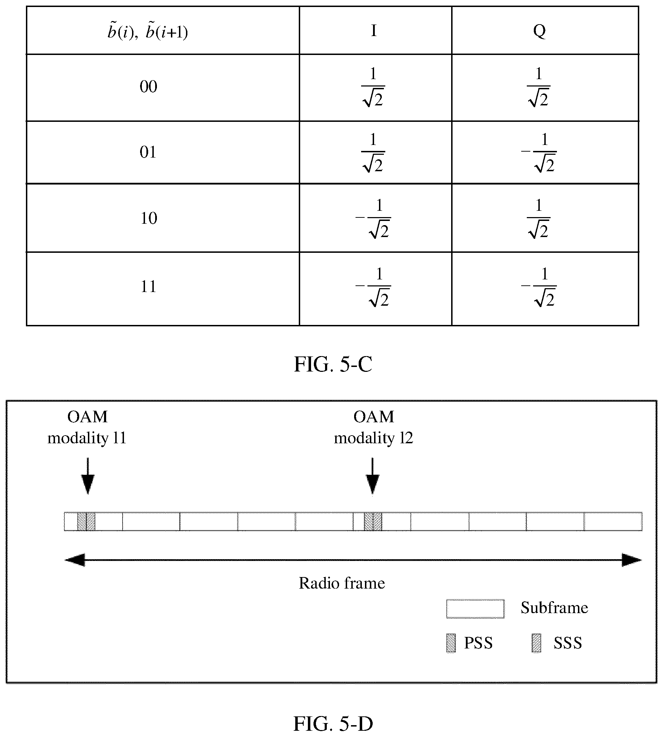

Further, the access network device modulates the fifth bit sequence through QPSK. Specifically, for QPSK modulation, refer to a table shown in FIG. 5-C.

It can be learned that, in the table shown in FIG. 5-C, four complex symbols may be obtained in case of four combinations of a pair of bit sequences $\tilde{b}(i)$ and $\tilde{b}(i + 1)$. For example, a complex symbol corresponding to bits "01" is $\frac{1}{\sqrt{2}} - j \cdot \frac{1}{\sqrt{2}}$, where j is an imaginary unit. For another example, a complex symbol corresponding to bits "11" is $-\frac{1}{\sqrt{2}} - j \cdot \frac{1}{\sqrt{2}}$. Further, in Table 1, I is a real part, and Q is an imaginary part. It can be understood that the complex symbol meets the following formula: $x = I + j \cdot Q$, where x is the complex symbol.

Further, the access network device maps the at least one complex symbol of the first signal to the at least two subframes of the radio frame. With reference to FIG. 5-B, it can be learned that the access network device maps the at least one complex symbol of the first signal to four subframes of the radio frame, and further determines four different OAM modalities for the four subframes. For example, a subframe A corresponds to an OAM modality 11, a subframe B corresponds to an OAM modality l2, a subframe C corresponds to an OAM modality 13, and a subframe D corresponds to an OAM modality 14.

Further, each of the at least two subframes corresponds to one complex symbol of the first signal, and complex symbols corresponding to all of the at least two subframes may be all the same, may be partially the same, or may be different from each other.

For example, if the at least two subframes include a subframe A, a subframe B, and a subframe C, a case 1 may be as follows: Complex symbols corresponding to the subframe A, the subframe B, and the subframe C are all $\frac{1}{\sqrt{2}} - j \cdot \frac{1}{\sqrt{2}}$. A case 2 may be as follows: A complex symbol corresponding to the subframe A is $-\frac{1}{\sqrt{2}} - j \cdot \frac{1}{\sqrt{2}}$, and complex symbols corresponding to the subframe B and the subframe C are $\frac{1}{\sqrt{2}} - j \cdot \frac{1}{\sqrt{2}}$. A case 3 is as follows: A complex symbol corresponding to the subframe A is $-\frac{1}{\sqrt{2}} - j \cdot \frac{1}{\sqrt{2}}$, a complex symbol corresponding to the subframe B is $\frac{1}{\sqrt{2}} + j \cdot \frac{1}{\sqrt{2}}$, and a complex symbol corresponding to the subframe C is $\frac{1}{\sqrt{2}} - j \cdot \frac{1}{\sqrt{2}}$.

Each of the at least one symbol may further include one of the following: a PSS or an SSS. The PSS may be used by a terminal device to perform downlink synchronization, and the SSS may be used by the terminal device to search for a cell.

Further, FIG. 5-D is a schematic diagram of mapping a symbol to a radio frame according to an embodiment of this application. As shown in FIG. 5-D, it can be learned that a PSS, an SSS, and the like are mapped to each of two subframes of a radio frame. In addition, the two subframes respectively correspond to an OAM modality 11 and an OAM modality l2. That is, PSSs and SSSs in a same subframe are transmitted by using a same OAM modality.

Further, each of the at least two subframes corresponds to a PSS and an SSS, and all of the at least two subframes correspond to a same PSS and a same SSS. For example, if the at least two subframes include a subframe A and a subframe B, the subframe A corresponds to a PSS and an SSS, and the subframe B corresponds to a PSS and an SSS. Further, the PSS corresponding to the subframe A is the same as the PSS corresponding to the subframe B, and the SSS corresponding to the subframe A is the same as the SSS corresponding to the subframe B.

It can be understood that the access network device may not determine an OAM modality for another subframe, or may determine an OAM modality for another subframe. The another subframe is at least one subframe, of the radio frame, to which no complex symbol of the first signal is mapped; or the another subframe is at least one subframe, of the radio frame, to which no PSS or SSS is mapped. This is not limited in this application. In addition, when the access network device determines the OAM modality for the another subframe, content included in this application may still be used. This is not limited herein.

Optionally, in a possible implementation, OAM modalities corresponding to adjacent subframes of the at least two subframes may be different.

The adjacent subframes include subframes whose sending times are adjacent, and the sending times are times when the subframes are sent.

For example, the radio frame includes three subframes, and the three subframes are a subframe A, a subframe B, and a subframe C. Further, it is assumed that one complex symbol of the first signal is mapped to each of the subframe A, the subframe B, and the subframe C. A time when the subframe A is sent is 14:32:05 on November 7, 2019. A time when the subframe B is sent is 14:32:07 on November 7, 2019. A time when the subframe C is sent is 14:32:10 on November 7, 2019. It can be learned that the sending time of the subframe A is the earliest, and the subframe B is sent after the subframe A is sent. Therefore, the subframe A and the subframe B are adjacent subframes. The subframe C is sent after the subframe B is sent. Therefore, the subframe B and the subframe C are adjacent subframes. Further, the subframe A may correspond to an OAM modality 11, the subframe B may correspond to an OAM modality I2, and the subframe C may correspond to the OAM modality 11; or the subframe A may correspond to an OAM modality -11, the subframe B may correspond to an OAM modality I2, and the subframe C may correspond to an OAM modality I3. OAM modalities corresponding to the subframe A, the subframe B, and the subframe C are not limited in this application.

It can be learned that, in the foregoing example solution, because the OAM modalities corresponding to the adjacent subframes of the at least two subframes are different, electromagnetic waves interact with each other when the at least two subframes are transmitted, thereby enhancing an electromagnetic field, reducing signal fading, and improving a diversity effect.

Optionally, in a possible implementation, OAM modalities corresponding to all of the at least two subframes may be different. For example, the radio frame includes three subframes, and the three subframes are a subframe A, a subframe B, and a subframe C. In this case, the subframe A may correspond to an OAM modality 11, the subframe B may correspond to an OAM modality I2, and the subframe C may correspond to an OAM modality I3.

It can be learned that, because the OAM modalities corresponding to all of the at least two subframes are different, electromagnetic waves can interact with each other when the at least two subframes are transmitted, thereby enhancing an electromagnetic field, reducing signal fading, and improving a diversity effect.

It can be understood that the radio frame includes a first subframe, a second subframe, a third subframe, and a fourth subframe, where the first subframe and the second subframe are adjacent subframes, the second subframe and the third subframe are adjacent subframes, and the third subframe and the fourth subframe are adjacent subframes. In a possible implementation, an OAM modality corresponding to the second subframe, an OAM modality corresponding to the third subframe, and an OAM modality corresponding to the fourth subframe all have an association relationship with an OAM modality corresponding to the first subframe. For example, the OAM modality corresponding to the first subframe is 11, the OAM modality corresponding to the second subframe is $I1 + \Delta l$, the OAM modality corresponding to the third subframe is $I1 + 2\Delta l$, and the OAM modality corresponding to the fourth subframe is $I1 + 3\Delta l$. $\Delta l$ is a difference between adjacent OAM modalities in the OAM modality sequence supported by the system. In another possible implementation, an OAM modality corresponding to the third subframe has an association relationship with an OAM modality corresponding to the first subframe, and an OAM modality corresponding to the fourth subframe has an association relationship with an OAM modality corresponding to the second subframe. For example, the OAM modality corresponding to the first subframe is 11, the OAM modality corresponding to the second subframe is I2, the OAM modality corresponding to the third subframe is $I1 + 2\Delta l$, and the OAM modality corresponding to the fourth subframe is -I2.

Optionally, in a possible implementation, an OAM modality corresponding to each of the at least two subframes meets the following formula: $(ml + n\Delta l)$, where both m and n are integers, and $l$ is an OAM modality in the first OAM modality sequence. When a quantity of OAM modalities corresponding to the first OAM modality sequence is 1, $\Delta l$ is 0; or when a quantity of OAM modalities corresponding to the first OAM modality sequence is greater than or equal to 2, $\Delta l$ is a difference between adjacent OAM modalities in the first OAM modality sequence.

For example, the OAM modality corresponding to the subframe A in the radio frame may be $l$, $2l$, $(5l + \Delta l)$, or $(5l - 2\Delta l)$.

The quantity of OAM modalities corresponding to the first OAM modality sequence is a quantity of OAM modalities in the first OAM modality sequence.

The first OAM modality sequence is an OAM modality sequence supported by the system.

For example, when the first OAM modality sequence is {2}, the quantity of OAM modalities corresponding to the first OAM modality sequence is 1. Further, the OAM modality corresponding to the subframe A in the radio frame may be 2, or may be $3 \times 2$, that is, 6. For another example, if the first OAM modality sequence is {1, 2, 3, 4}, the quantity of OAM modalities corresponding to the first OAM modality sequence is 4, and the difference between adjacent OAM modalities in the first OAM modality sequence is 1. Further, the OAM modality corresponding to the subframe A in the radio frame may be any OAM modality in the first OAM modality sequence; or the OAM modality corresponding to the subframe A may be 3 × 2, that is, 6; or the OAM modality corresponding to the subframe A may be 3 × 2 + 2 × 1, that is, 8; or the OAM modality corresponding to the subframe A may be 2 × 2 - 5 × 1, that is, -1.

It can be learned that, in the foregoing technical solution, the OAM modality corresponding to each of the at least two subframes meets the foregoing formula, thereby enriching manners of determining the OAM modality corresponding to each subframe.

Optionally, in a possible implementation, the first OAM modality sequence includes k OAM modalities. When k is 1, each of the k OAM modalities is a non-zero integer; or when k is greater than or equal to 2, each of the k OAM modalities is a non-zero integer, and the k OAM modalities are different from each other.

For example, the first OAM modality sequence includes one OAM modality, and the first OAM modality sequence may be {2} or {-8}; or the first OAM modality sequence includes three OAM modalities, and the first OAM modality sequence may be {1, 2, 3}, {-1, 1, 2}, or {-6, -4, -2}.

It can be learned that, in the foregoing solution, an OAM modality included in the first OAM modality sequence is determined based on different quantities of OAM modalities included in the first OAM modality sequence, to prepare for subsequent improvement of a diversity effect.

In a possible implementation, when k is an even number greater than or equal to 2, the first OAM modality sequence includes $\frac{k}{2}$ pairs of OAM modalities; or when k is an odd number greater than 2, the first OAM modality sequence includes $\frac{k-1}{2}$ pairs of OAM modalities. Each pair of OAM modalities of the $\frac{k}{2}$ pairs of OAM modalities and the $\frac{k-1}{2}$ pairs of OAM modalities have opposite wavefront phases.

For example, when k is 2, the first OAM modality sequence may be {-1, 1}, where 1 and -1 are a pair of OAM modalities, and 1 and -1 have opposite wavefront phases; or when k is 3, the first OAM modality sequence may be {-2, 2, 4}, where 2 and -2 are a pair of OAM modalities, and 2 and - 2 have opposite wavefront phases.

It can be understood that OAM modalities corresponding to opposite wavefront phases may be configured by the access network device or preset. For example, when k is 2, the first OAM modality sequence may be {-1, 5}, where 5 and -1 are a pair of OAM modalities, and 5 and -1 have opposite wavefront phases. To be specific, the access network device may configure any two different OAM modalities as a pair of OAM modalities that have opposite wavefront phases. Further, the access network device may configure any two OAM modalities that are opposite numbers of each other as a pair of OAM modalities that have opposite wavefront phases.

It can be learned that, in the foregoing technical solution, when a quantity of OAM modalities included in the first OAM modality sequence varies, a quantity of pairs of OAM modalities included in the first OAM modality sequence is determined, and it is also determined that each pair of OAM modalities have opposite wavefront phases, to prepare for subsequent improvement of a diversity effect.

502: The access network device sends the at least two subframes.

Correspondingly, the terminal device receives the radio frame including the at least two subframes. At least one symbol is mapped to each of the at least two subframes, and OAM modalities corresponding to all of the at least two subframes have an association relationship.

503: The terminal device demodulates the radio frame based on the association relationship between the OAM modalities corresponding to all of the at least two subframes.

It can be understood that the terminal device may obtain the at least one symbol by demodulating the radio frame. Further, when obtaining the PSS and the SSS, the terminal device may perform downlink synchronization by using the PSS, and search for a cell by using the SSS. Further, when obtaining the at least one complex symbol of the first signal, the terminal may perform random access based on the at least one complex symbol of the first signal, to perform uplink synchronization and set up an RRC connection to the access network device.

It can be learned that, in the foregoing technical solution, the OAM modalities are determined for the at least two subframes, and the OAM modalities corresponding to all of the at least two subframes have an association relationship, so that electromagnetic waves interact with each other during transmission of the at least two subframes, thereby enhancing an electromagnetic field, reducing signal fading, and helping improve a diversity effect.

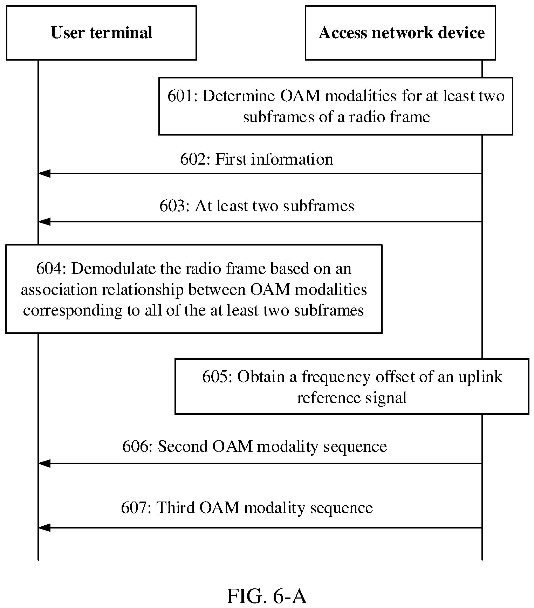

FIG. 6-A is a schematic diagram of another OAM-based communication method according to an embodiment of this application. The another OAM-based communication method may include the following steps.

601: An access network device determines OAM modalities for at least two subframes of a radio frame.

Refer to step 401 in the embodiment shown in FIG. 4. Details are not described herein again.

602: The access network device sends first information, where the first information includes a first field and an initial OAM modality in a first OAM modality sequence, and the first field is used to indicate $\Delta l$, or the first field is used to indicate both $\Delta l$ and a first subcarrier spacing.

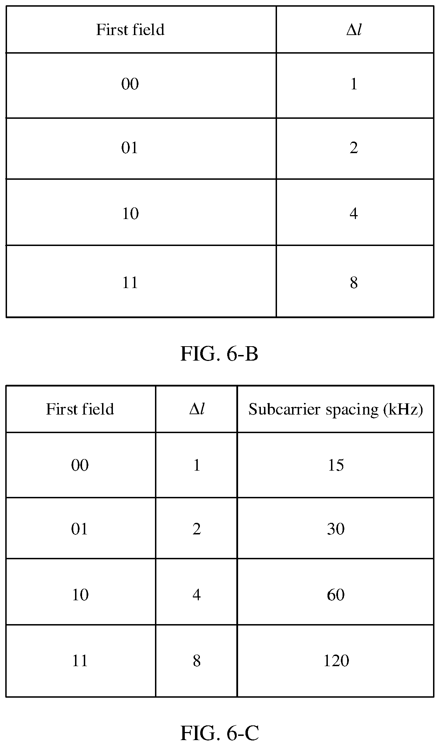

For example, refer to a table shown in FIG. 6-B. The table shown in FIG. 6-B is a schematic diagram of a first field indication $\Delta l$ according to an embodiment of this application. It can be learned that, in the table shown in FIG. 6-B, two bits, namely, (00, 01, 10, and 11), are used to indicate different $\Delta l$. For example, 00 indicates that $\Delta l$ is 1, and 11 indicates that $\Delta l$ is 8.

For another example, refer to a table shown in FIG. 6-C. The table shown in FIG. 6-C is a schematic diagram of a first field indication $\Delta l$ and a subcarrier spacing according to an embodiment of this application.

It can be learned that, in the table shown in FIG. 6-C, two bits, namely, (00, 01, 10, and 11), are used to indicate different $\Delta l$ and subcarrier spacings. For example, 00 indicates that $\Delta l$ is 1, and also indicates that the subcarrier spacing is 15 kHz; and 11 indicates that $\Delta l$ is 8, and also indicates that the subcarrier spacing is 120 kHz.

It can be understood that a terminal device receives the first information, where the first information includes the first field and the initial OAM modality in the first OAM modality sequence, and the first field is used to indicate $\Delta l$, or the first field is used to indicate both $\Delta l$ and the first subcarrier spacing.

It can be learned that, in the foregoing technical solution, the terminal is enabled to obtain the first information. In addition, the first field is used to indicate $\Delta l$, or is used to indicate both $\Delta l$ and the first subcarrier spacing, thereby reducing overheads.

Optionally, for the access network device, in a possible implementation, the sending first information includes: sending the first information by using a system information block, radio resource control signaling, or downlink control information. It can be learned that, in the foregoing technical solution, manners of sending the first information are enriched.

It can be understood that, for the terminal device, in a possible implementation, the receiving the first information includes: receiving the first information by using a system information block, radio resource control signaling, or downlink control information. It can be learned that, in the foregoing technical solution, manners of obtaining the first information are enriched.

Step 602 may be alternatively performed before step 601.

603: The access network device sends the at least two subframes.

Correspondingly, the terminal device receives the radio frame including the at least two subframes.

604: The terminal device demodulates the radio frame based on an association relationship between OAM modalities corresponding to all of the at least two subframes.

605: The access network device obtains a frequency offset of an uplink reference signal.

The uplink reference signal includes a DMRS and/or an SRS.

If the frequency offset of the uplink reference signal is less than or equal to a first frequency offset, step 606 is performed; or if the frequency offset of the uplink reference signal is greater than the first frequency offset, step 607 is performed. The first frequency offset is configured by the access network device or is preset.

Further, if the frequency offset of the uplink reference signal is equal to the first frequency offset, step 606 may be performed, or step 607 may be performed. It can be understood that, if the frequency offset of the uplink reference signal is equal to the first frequency offset, the access network device may preferentially send a second OAM modality sequence, or an initial OAM modality in the second OAM modality sequence and a difference between adjacent OAM modalities in the second OAM modality sequence; or the access network device may preferentially send a third OAM modality sequence, or an initial OAM modality in the third OAM modality sequence and a difference between adjacent OAM modalities in the third OAM modality sequence. A specific case of precedence is not limited in this application.

The difference between adjacent OAM modalities in the second OAM modality sequence is less than a difference between adjacent OAM modalities in the first OAM modality interval.

The difference between adjacent OAM modalities in the third OAM modality sequence is greater than the difference between adjacent OAM modalities in the first OAM modality, and the difference between adjacent OAM modalities in the third OAM modality sequence is greater than the difference between adjacent OAM modalities in the second OAM modality sequence.

606: The access network device sends the second OAM modality sequence, or the initial OAM modality in the second OAM modality sequence and the difference between adjacent OAM modalities in the second OAM modality sequence.

For example, if the second OAM modality sequence is {2}, the access network device sends {2}; or if the second OAM modality sequence is {1, 3, 5, 7}, the access network device may send {1, 3, 5, 7}, or may send 1 and 2, where 1 is the initial OAM modality in the second OAM modality sequence, and 2 is the difference between adjacent OAM modalities in the second OAM modality sequence.

Correspondingly, the terminal device receives the second OAM modality sequence, or the initial OAM modality in the second OAM modality sequence and the difference between adjacent OAM modalities in the second OAM modality sequence.

For example, the terminal device may receive the second OAM modality sequence. For example, the second OAM modality sequence is {2}, or the second OAM modality sequence is {1, 3, 5, 7}. The terminal device may receive the initial OAM modality in the second OAM modality sequence and the difference between adjacent OAM modalities in the second OAM modality sequence. For example, the initial OAM modality in the second OAM modality sequence is 1, and the difference between adjacent OAM modalities in the second OAM modality sequence is 2.

607: The access network device sends the third OAM modality sequence, or the initial OAM modality in the third OAM modality sequence and the difference between adjacent OAM modalities in the third OAM modality sequence.

For example, if the third OAM modality sequence is {2}, the access network device sends {2}; or if the third OAM modality sequence is {1, 3, 5, 7}, the access network device may send {1, 3, 5, 7}, or may send 1 and 2, where 1 is the initial OAM modality in the third OAM modality sequence, and 2 is the difference between adjacent OAM modalities in the third OAM modality sequence.

Correspondingly, the terminal device receives the third OAM modality sequence, or the initial OAM modality in the third OAM modality sequence and the difference between adjacent OAM modalities in the third OAM modality sequence.

For example, the terminal device may receive the third OAM modality sequence. For example, the third OAM modality sequence is {2}, or the third OAM modality sequence is {1, 3, 5, 7}. The terminal device may receive the initial OAM modality in the third OAM modality sequence and the difference between adjacent OAM modalities in the third OAM modality sequence. For example, the initial OAM modality in the third OAM modality sequence is 1, and the difference between adjacent OAM modalities in the third OAM modality sequence is 2.

It can be learned that, in the foregoing technical solution, the OAM modalities are determined for the at least two subframes, and the OAM modalities corresponding to all of the at least two subframes have an association relationship, so that electromagnetic waves interact with each other during transmission of the at least two subframes, thereby enhancing an electromagnetic field, reducing signal fading, and improving a diversity effect.

Further, the terminal is further enabled to obtain the first information. In addition, the first field is used to indicate $\Delta l$, or is used to indicate both $\Delta l$ and the first subcarrier spacing, thereby reducing overheads. In addition, reliability of signal transmission is further improved.

Optionally, for the access network device, in a possible implementation, the method further includes: sending second information, where the second information includes a second field and the initial OAM modality in the second OAM modality sequence, or the second information includes a second field and the initial OAM modality in the third OAM modality sequence. The second field is used to indicate the difference between adjacent OAM modalities in the second OAM modality sequence or the difference between adjacent OAM modalities in the third OAM modality sequence; or the second field is used to indicate both the difference between adjacent OAM modalities in the second OAM modality sequence and a second subcarrier spacing, or the difference between adjacent OAM modalities in the third OAM modality sequence and a third subcarrier spacing.

For example, if the second OAM modality sequence is {2}, the second information is the second field; or if the second OAM modality sequence is {1, 3, 5, 7}, the second information includes the second field and the initial OAM modality in the second OAM modality sequence. Further, 1 is the initial OAM modality in the second OAM modality sequence. The second field is used to indicate the difference between adjacent OAM modalities in the second OAM modality sequence, namely, 2. Assuming that the second subcarrier spacing is 15 kilohertz kHz, the second field is used to indicate both the difference between adjacent OAM modalities in the second OAM modality sequence and the second subcarrier spacing, namely, 2 and 15 kHz.

For another example, if the third OAM modality sequence is {2}, the second information is the second field; or if the third OAM modality sequence is {1, 3, 5, 7}, the second information includes the second field and the initial OAM modality in the third OAM modality sequence. Further, 1 is the initial OAM modality in the third OAM modality sequence. The second field is used to indicate the difference between adjacent OAM modalities in the third OAM modality sequence, namely, 2. Assuming that the third subcarrier spacing is 15 kHz, the second field is used to indicate both the difference between adjacent OAM modalities in the third OAM modality sequence and the third subcarrier spacing, namely, 2 and 15 kHz.

Correspondingly, the terminal device receives the second information.

Further, the access network device may send the second information by using a system information block, radio resource control signaling, or downlink control information. Correspondingly, the terminal device may receive the second information by using a system information block, radio resource control signaling, or downlink control information.

It can be learned that, in the foregoing technical solution, the terminal is enabled to obtain the second information. In addition, the second field is used to indicate information, or is used to indicate different information, thereby reducing overheads. In addition, manners of obtaining the second information are enriched.

The following describes some device embodiments.

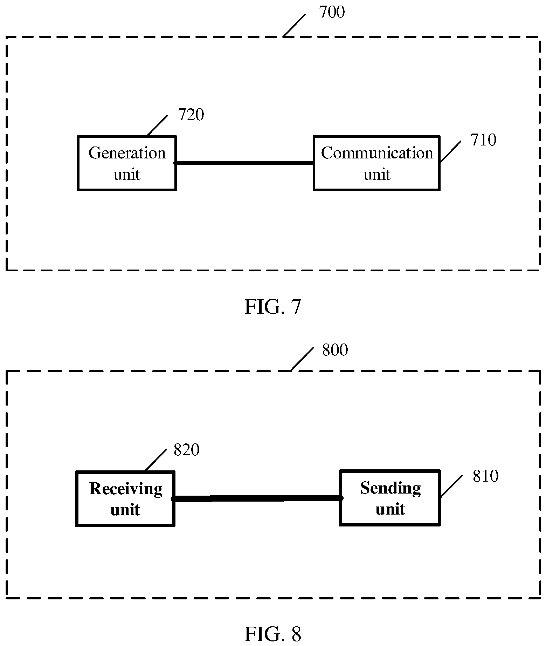

With reference to FIG. 7, an embodiment of this application provides a user terminal 700. The access network device 700 may include a generation unit 710 and a communication unit 720.

The generation unit 710 is configured to generate a capability reporting message, where the capability reporting message carries an OAM modality capability indication, and the OAM modality capability indication indicates an OAM modality capability supported by the user terminal.

The communication unit 720 is configured to send the capability reporting message to an access network device.

For example, the OAM modality capability indication includes one or more of the following information: a set of uplink OAM modalities supported by the user terminal, a set of downlink OAM modalities supported by the user terminal, a

**EP 4 061 046 B1**

maximum quantity of uplink OAM modalities supported by the user terminal and whether an uplink negative modality is supported, a maximum quantity of downlink OAM modalities supported by the user terminal and whether a downlink negative modality is supported, an uplink OAM modality initial value and an uplink OAM modality interval supported by the user terminal, or a downlink OAM modality initial value and a downlink OAM modality interval supported by the user terminal.

For details about function implementation of each functional unit of the user terminal 700, for example, refer to related detailed descriptions of the method provided in the embodiment corresponding to FIG. 3 or FIG. 4. Details are not described herein again.

With reference to FIG. 8, an embodiment of this application provides an access network device 800. The access network device 800 may include a receiving unit 820 and a sending unit 810.

The sending unit 810 is configured to send a capability query request to a user terminal.

The receiving unit 820 is configured to receive a capability reporting message that is used to respond to the capability query request, where the capability reporting message carries an OAM modality capability indication, and the OAM modality capability indication indicates an OAM modality capability supported by the user terminal.

For example, the OAM modality capability indication includes one or more of the following information: a set of uplink OAM modalities supported by the user terminal, a set of downlink OAM modalities supported by the user terminal, a maximum quantity of uplink OAM modalities supported by the user terminal and whether an uplink negative modality is supported, a maximum quantity of downlink OAM modalities supported by the user terminal and whether a downlink negative modality is supported, an uplink OAM modality initial value and an uplink OAM modality interval supported by the user terminal, or a downlink OAM modality initial value and a downlink OAM modality interval supported by the user terminal.

For details about function implementation of each functional unit of the access network device 800, for example, refer to related detailed descriptions of the method provided in the embodiment corresponding to FIG. 3 or FIG. 4. Details are not described herein again.

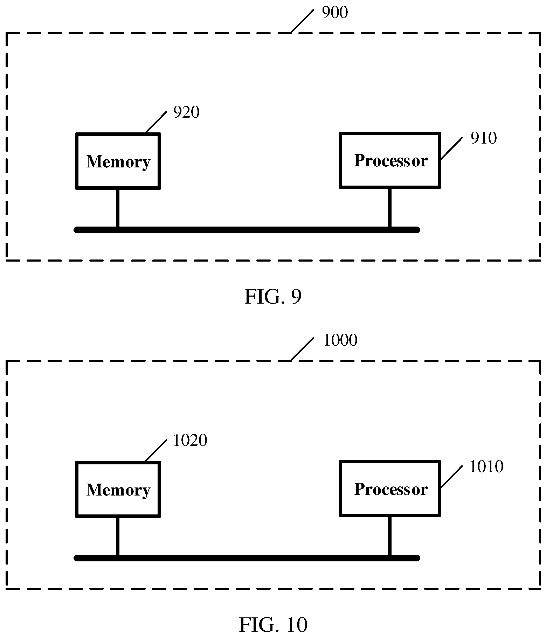

With reference to FIG. 9, an embodiment of this application provides a user terminal 900. The user terminal 900 may include:

a processor 910 and a memory 920 that are coupled to each other, where the processor 910 is configured to invoke a computer program stored in the memory 920, to perform some or all steps of any method that may be performed by the user terminal in embodiments of this application.

With reference to FIG. 10, an embodiment of this application provides an access network device 1000, including a processor 1010 and a memory 1020 that are coupled to each other. The processor 1010 is configured to invoke a computer program stored in the memory 1020, to perform some or all steps of any method that may be performed by the access network device in embodiments of this application.

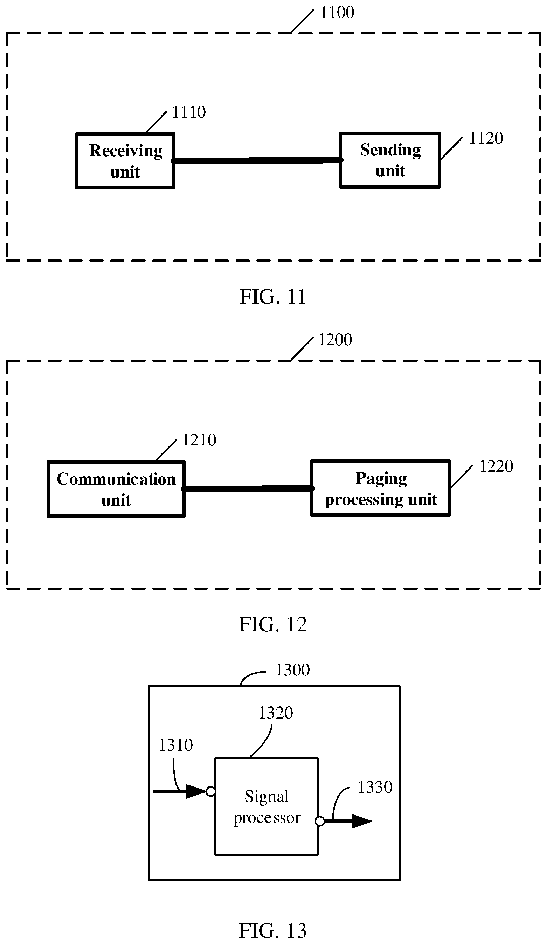

With reference to FIG. 11, an embodiment of this application provides an access network device 1100. The access network device 1100 may include a receiving unit 1110 and a sending unit 1120.

The receiving unit 1110 is configured to receive a paging message from a core network, where the paging message carries a user terminal category or a user terminal downlink category.

The sending unit 1120 is configured to send a paging indication message to a user terminal, where the paging indication message carries a quantity of OAM modalities of a paging channel, the quantity of OAM modalities of the paging channel is less than or equal to a maximum quantity of downlink OAM modalities of the user terminal, and a maximum quantity of OAM modalities of the user terminal can be determined based on the user terminal category or the user terminal downlink category.

For example, the user terminal downlink category (UE DL Category) includes one or more of the following characteristics: a maximum downlink transmission rate, whether 64QAM (Quadrature Phase Shift Keying, quadrature phase shift keying) is supported in downlink, a maximum quantity of downlink OAM modalities, or the like.

The user terminal category (UE Category) may include one or more of the following characteristics: a maximum downlink transmission rate, a maximum quantity of layers supported in downlink spatial multiplexing, a maximum quantity of downlink OAM modalities, a maximum uplink transmission rate, whether 64QAM is supported in uplink, a maximum quantity of uplink OAM modalities, or the like.

It is found through research that, in an OAM-based communication system, a maximum transmission rate is related to a quantity of OAM modalities supported, in addition to a modulation order supported, a quantity of carriers supported, a maximum quantity of multiple-input multiple-output layers supported, and the like. The following examples describe some possible manners of calculating the maximum transmission rate.

For example,

18

$$\text{Max Data Rate-1} = \sum_{l1=1}^{L1} \sum_{j1=1}^{J1} \left( v_{Layers}^{(j1)} \cdot Q_m^{(j1)} \cdot f^{(j1)} \cdot R_{max} \cdot \frac{N_{PRB}^{BW(j1),\mu} \cdot 12}{T_s^{\mu}} \cdot \left(1 - OH^{(j1)}\right) \right)$$

, where

Max Data Rate-1 indicates a maximum downlink transmission rate, L1 indicates a quantity of downlink OAM modalities supported by the access network device, J1 indicates a quantity of downlink carriers supported by the access network device, $v_{Layers}^{(j1)}$ indicates maximum quantities of multiple-input multiple-output layers supported by different downlink carriers, $Q_m^{(j1)}$ indicates maximum modulation orders supported by different downlink carriers, $f^{(j1)}$ indicates adjustable factors of different downlink carriers, $R_{max}$ indicates a conversion constant, $N_{PRB}^{BW(j1),\mu}$ indicates quantities of physical resource blocks supported by corresponding bandwidth of different downlink carriers, $OH^{(j1)}$ indicates overhead values of different downlink carriers, and $T_s^{\mu}$ indicates average orthogonal frequency division multiplexing (OFDM, Orthogonal Frequency Division Multiplexing) symbol duration.

For another example,

$$\text{Max Data Rate-2} = \sum_{l2=1}^{L2} \sum_{j2=1}^{J2} \left( v_{Layers}^{(j2)} \cdot Q_m^{(j2)} \cdot f^{(j2)} \cdot R_{max} \cdot \frac{N_{PRB}^{BW(j2),\mu} \cdot 12}{T_s^{\mu}} \cdot \left(1 - OH^{(j2)}\right) \right)$$

, where

Max Data Rate-2 indicates a maximum uplink transmission rate, L2 indicates a quantity of uplink OAM modalities supported by the user terminal, J2 indicates a quantity of uplink carriers supported by the user terminal, $v_{Layers}^{(j2)}$ indicates maximum quantities of multiple-input multiple-output layers supported by different uplink carriers, $Q_m^{(j2)}$ indicates maximum modulation orders supported by different uplink carriers, $f^{(j2)}$ indicates adjustable factors of different uplink carriers, $R_{max}$ indicates a conversion constant, $N_{PRB}^{BW(j2),\mu}$ indicates quantities of physical resource blocks supported by corresponding bandwidth of different uplink carriers, $T_s^{\mu}$ indicates average orthogonal frequency division multiplexing OFDM symbol duration, and $OH^{(j2)}$ indicates overhead values of different uplink carriers.

For details about function implementation of each functional unit of the access network device 1100, for example, refer to related detailed descriptions of the method provided in the embodiment corresponding to FIG. 2. Details are not described herein again.

With reference to FIG. 12, an embodiment of this application provides a user terminal 1200. The access network device 1200 may include a communication unit 1210 and a paging processing unit 1220.

The communication unit 1210 is configured to receive a paging indication message from an access network device, where the paging indication message carries a quantity of OAM modalities of a paging channel, and the quantity of OAM modalities of the paging channel is less than or equal to a maximum quantity of downlink OAM modalities supported by the user equipment.

The paging processing unit 1220 is configured to demodulate, by the user terminal, data in the paging channel based on the quantity of OAM modalities of the paging channel.

For details about function implementation of each functional unit of the user terminal 1200, for example, refer to related detailed descriptions of the method provided in the embodiment corresponding to FIG. 2. Details are not described herein again.

With reference to FIG. 13, an embodiment of this application provides a communication apparatus 1300, including:

at least one input end 1310, a signal processor 1320, and at least one output end 1330.

The signal processor 1320 is configured to perform some or all steps of any method that may be performed by an access network device or a user terminal in embodiments of this application.

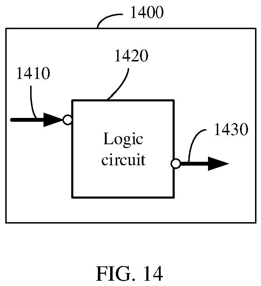

With reference to FIG. 14, an embodiment of this application provides a communication apparatus 1400, including: an input interface circuit 1410, a logic circuit 1420, and an output interface circuit 1430. The logic circuit 1420 is configured to perform some or all steps of any method that may be performed by an access network device or a user terminal in embodiments of this application.

An embodiment of this application further provides a computer-readable storage medium. The computer-readable storage medium stores a computer program. When the computer program is executed by hardware (for example, a processor), some or all steps of any method that may be performed by an access network device in embodiments of this application can be performed.

An embodiment of this application further provides a computer-readable storage medium. The computer-readable storage medium stores a computer program. When the computer program is executed by hardware (for example, a processor), some or all steps of any method that may be performed by an access network device in embodiments of this application can be performed.

An embodiment of this application further provides a computer-readable storage medium. The computer-readable storage medium stores a computer program. The computer program is executed by hardware (for example, a processor), to perform some or all steps of any method that is performed by any device and that is in embodiments of this application.

An embodiment of this application further provides a computer program product including instructions. When the computer program product runs on a computer device, the computer device is enabled to perform some or all of the steps of any method in the foregoing aspects.

All or some of the foregoing embodiments may be implemented by using software, hardware, firmware, or any combination thereof. When software is used for implementation, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, including one or more usable media. The usable medium may be a magnetic medium (for example, a floppy disk, a hard disk, or a magnetic tape), an optical medium (for example, an optical disc), a semiconductor medium (for example, a solid-state drive), or the like. In the foregoing embodiments, the description of each embodiment has respective focuses. For a part that is not described in detail in an embodiment, refer to related description in other embodiments.

In the foregoing embodiments, the description of each embodiment has respective focuses. For a part that is not described in detail in an embodiment, refer to related description in other embodiments.

In several embodiments provided in this application, it should be understood that the disclosed apparatus may be implemented in other manners. For example, the described apparatus embodiment is merely an example. For example, the unit division is merely logical function division or may be other division during actual implementation. For example, a plurality of units or components may be combined or integrated into another system, or some features may be ignored or not performed. In addition, the displayed or discussed mutual indirect couplings or direct couplings or communication connections may be implemented through some interfaces. The indirect couplings or communication connections between the apparatuses or units may be implemented in electronic or other forms.

The units described as separate parts may or may not be physically separate. Parts displayed as units may or may not be physical units, and may be located at one position or may be distributed on a plurality of network units. Some or all units may be selected based on actual needs to achieve the objectives of the solutions of the embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium may include any medium that can store program code, such as a USB flash drive, a removable hard disk, a read-only memory (ROM, Read-Only Memory), a random access memory (RAM, Random Access Memory), a magnetic disk, or an optical disc.

**Claims**

1. An orbital angular momentum, OAM-based communication method, comprising:

    receiving (201), by an access network device, a paging message from a core network, wherein the paging message carries a user terminal category or a user terminal downlink category; and
    sending (202), by the access network device, a paging indication message to a user terminal, wherein the paging indication message carries a quantity of OAM modalities of a paging channel, the quantity of OAM modalities of the paging channel is less than or equal to a maximum quantity of downlink OAM modalities supported by the user terminal, and the maximum quantity of downlink OAM modalities supported by the user terminal is determined by the access network device based on the user terminal category or the user terminal downlink category.

2. The method according to claim 1, wherein the user terminal downlink category comprises one or more of the following characteristics: a maximum downlink transmission rate supported, whether 64QAM is supported in downlink, or a maximum quantity of downlink OAM modalities supported.

3. The method according to claim 1 or 2, wherein the user terminal category comprises one or more of the following characteristics: a maximum downlink transmission rate supported, a maximum quantity of layers supported in downlink spatial multiplexing, a maximum quantity of downlink OAM modalities supported, a maximum uplink transmission rate supported, whether 64QAM is supported in uplink, or a maximum quantity of uplink OAM modalities supported.

4. The method according to claim 2 or 3, wherein

$$\text{Max Data Rate-1} = \sum_{l1=1}^{L1} \sum_{j1=1}^{J1} \left( v_{Layers}^{(j1)} \cdot Q_m^{(j1)} \cdot f^{(j1)} \cdot R_{\max} \cdot \frac{N_{PRB}^{BW(j1),\mu} \cdot 12}{T_s^{\mu}} \cdot \left( 1 - OH^{(j1)} \right) \right),$$

wherein
Max Data Rate-1 indicates the maximum downlink transmission rate supported, L1 indicates a quantity of downlink OAM modalities supported by the access network device, J1 indicates a quantity of downlink carriers supported by the access network device, $v_{Layers}^{(j1)}$ indicates maximum quantities of multiple-input multiple-output layers supported by different downlink carriers, $Q_m^{(j1)}$ indicates maximum modulation orders supported by different downlink carriers, $f^{(j1)}$ indicates adjustable factors of different downlink carriers, $R_{\max}$ indicates a conversion constant, $N_{PRB}^{BW(j1),\mu}$ indicates quantities of physical resource blocks supported by corresponding bandwidth of different downlink carriers, $T_s^{\mu}$ indicates average orthogonal frequency division multiplexing OFDM symbol duration, and $OH^{(j1)}$ indicates overhead values of different downlink carriers.

5. The method according to claim 3 or 4, wherein

$$\text{Max Data Rate-2} = \sum_{l2=1}^{L2} \sum_{j2=1}^{J2} \left( v_{Layers}^{(j2)} \cdot Q_m^{(j2)} \cdot f^{(j2)} \cdot R_{\max} \cdot \frac{N_{PRB}^{BW(j2),\mu} \cdot 12}{T_s^{\mu}} \cdot \left( 1 - OH^{(j2)} \right) \right),$$

wherein
Max Data Rate-2 indicates the maximum uplink transmission rate supported, L2 indicates a quantity of uplink OAM modalities supported by the user terminal, J2 indicates a quantity of uplink carriers supported by the user terminal, $v_{Layers}^{(j2)}$ indicates maximum quantities of multiple-input multiple-output layers supported by different uplink carriers, $Q_m^{(j2)}$ indicates maximum modulation orders supported by different uplink carriers, $f^{(j2)}$ indicates adjustable factors

of different uplink carriers, $R_{\mathrm{max}}$ indicates a conversion constant, $N_{PRB}^{BW(j2),\mu}$ indicates quantities of physical resource blocks supported by corresponding bandwidth of different uplink carriers, $T_s^{\mu}$ indicates average orthogonal frequency division multiplexing OFDM symbol duration, and $OH^{(j2)}$ indicates overhead values of different uplink carriers.

6. An orbital angular momentum OAM-based communication method, comprising: receiving (202), by a user terminal, a paging indication message from an access network device, wherein the paging indication message carries a quantity of OAM modalities of a paging channel, and the quantity of OAM modalities of the paging channel is less than or equal to a maximum quantity of downlink OAM modalities supported by the user terminal and determined by the access network device based on the user terminal category or the user terminal downlink category; and
Demodulating (203), by the user terminal, data in the paging channel based on the quantity of OAM modalities of the paging channel.

7. A user terminal, comprising:

a processor and a memory that are coupled to each other, wherein
the processor is configured to invoke a computer program stored in the memory, to perform the method according to claim 6.

8. An access network device, comprising:

a processor and a memory that are coupled to each other, wherein
the processor is configured to invoke a computer program stored in the memory, to perform the method according to any one of claims 1 to 5.

9. A computer-readable storage medium, wherein

the computer-readable storage medium stores a computer program, and when the computer program is executed by a processor of an access network device,
the method according to any one of claims 1 to 5 is performed.

10. A computer-readable storage medium, wherein

the computer-readable storage medium stores a computer program, and when the computer program is executed by a processor of a user terminal,
the method according to claim 6 is performed.

**Patentansprüche**

1. Bahndrehimplus-, OAM-basiertes Kommunikationsverfahren, umfassend:

Empfangen (201), durch ein Zugangsnetzwerkgerät, einer Funkrufnachricht von einem Kernnetzwerk, wobei die Funkrufnachricht eine Benutzerendgerätekategorie oder eine Benutzerendgeräte-Abwärtsstreckenkategorie führt, und
Senden (202), durch das Zugangsnetzwerkgerät, einer Funkrufanzeigenachricht an ein Benutzerendgerät, wobei die Funkrufanzeigenachricht eine Anzahl von OAM-Modalitäten eines Funkrufkanals führt, wobei die Anzahl von OAM-Modalitäten des Funkrufkanals kleiner als oder gleich einer maximalen Anzahl von Abwärtsstrecken-OAM-Modalitäten ist, die von dem Benutzerendgerät unterstützt wird, und wobei die maximale Anzahl von Abwärtsstrecken-OAM-Modalitäten, die von dem Benutzerendgerät unterstützt wird, durch das Zugangsnetzwerkgerät basierend auf der Benutzerendgerätekategorie oder der Benutzerendgeräte-Abwärtsstreckenkategorie bestimmt wird.

2. Verfahren nach Anspruch 1, wobei die Benutzerendgeräte-Abwärtsstreckenkategorie eine oder mehrere der folgenden Charakteristiken umfasst: eine maximale unterstützte Abwärtsstreckenübertragungsrate, ob 64QAM in der Abwärtsstrecke unterstützt wird oder eine maximale unterstützte Anzahl von Abwärtsstrecken-OAM-Modalitäten.

3. Verfahren nach Anspruch 1 oder 2, wobei die Benutzerendgerätekategorie eine oder mehrere der folgenden Charakteristiken umfasst: eine maximale unterstützte Abwärtsstreckenübertragungsrate, eine maximale Anzahl von Schichten, die in einem räumlichen Abwärtsstreckenmultiplexing unterstützt wird, eine maximale unterstützte Anzahl von Abwärtsstrecken-OAM-Modalitäten, eine maximale unterstützte Aufwärtsstreckenübertragungsrate, ob 64QAM in der Aufwärtsstrecke unterstützt wird oder eine maximale unterstützte Anzahl von Aufwärtsstrecken-OAM-Modalitäten.

4. Verfahren nach Anspruch 2 oder 3, wobei

$$\text{Max. Datenrate-1} = \sum_{l1=1}^{L1} \sum_{j1=1}^{J1} \left( v_{Schichten}^{(j1)} \cdot Q_m^{(j1)} \cdot f^{(j1)} \cdot R_{max} \cdot \frac{N_{PRB}^{BW(j1),\mu} \cdot 12}{T_s^\mu} \cdot \right.$$
$$\left. \left(1 - OH^{(j1)}\right) \right),$$

wobei

Max. Datenrate-1 die maximale unterstützte Abwärtsstreckenübertragungsrate anzeigt, L1 eine Anzahl von Abwärtsstrecken-OAM-Modalitäten, die von dem Zugangsnetzwerkgerät unterstützt wird, anzeigt, J1 eine Anzahl von Abwärtsstreckenträgern, die von dem Zugangsnetzwerkgerät unterstützt wird, anzeigt, $v_{Schichten}^{(j1)}$ maximale Anzahlen von Mehrfacheingabe-Mehrfachausgabe-Schichten, die von unterschiedlichen Abwärtsstreckenträgern unterstützt werden, anzeigt, $Q_m^{(j1)}$ maximale Modulationsordnungen, die von unterschiedlichen Abwärtsstreckenträgern unterstützt werden, anzeigt, $f^{(j1)}$ anpassbare Faktoren unterschiedlicher Abwärtsstreckenträger anzeigt, $R_{max}$ eine Umwandlungskonstante anzeigt, $N_{PRB}^{BW(j1),\mu}$ Anzahlen von physikalischen Ressourcenblöcken, die von entsprechenden Bandbreiten unterschiedlicher Abwärtsstreckenträger unterstützt werden, anzeigt, $T_s^\mu$ eine durchschnittliche orthogonale Frequenzmultiplex-OFDM-Symboldauer anzeigt und $OH^{(j1)}$ "Overhead"-Werte unterschiedlicher Abwärtsstreckenträger anzeigt.

5. Verfahren nach Anspruch 3 oder 4, wobei

$$\text{Max. Datenrate-2} = \sum_{l2=1}^{L2} \sum_{j2=1}^{J2} \left( v_{Schichten}^{(j2)} \cdot Q_m^{(j2)} \cdot f^{(j2)} \cdot R_{max} \cdot \frac{N_{PRB}^{BW(j2),\mu} \cdot 12}{T_s^\mu} \cdot \right.$$
$$\left. \left(1 - OH^{(j2)}\right) \right),$$

wobei

Max. Datenrate-2 die maximale unterstützte Aufwärtsstreckenübertragungsrate anzeigt, L2 eine Anzahl von Aufwärtsstrecken-OAM-Modalitäten, die von dem Benutzerendgerät unterstützt wird, anzeigt, J2 eine Anzahl von Aufwärtsstreckenträgern, die von dem Benutzerendgerät unterstützt wird, anzeigt, $v_{Schichten}^{(j2)}$ maximale Anzahlen von Mehrfacheingabe-Mehrfachausgabe-Schichten, die von unterschiedlichen Aufwärtsstreckenträgern unterstützt werden, anzeigt, $Q_m^{(j2)}$ maximale Modulationsordnungen, die von unterschiedlichen Aufwärtsstreckenträgern unterstützt werden, anzeigt, $f^{(j2)}$ anpassbare Faktoren unterschiedlicher Aufwärtsstreckenträger anzeigt, $R_{max}$ eine Umwandlungskonstante anzeigt, $N_{PRB}^{BW(j2),\mu}$ Anzahlen von physikalischen Ressourcenblöcken, die von entsprechenden Bandbreiten unterschiedlicher Aufwärtsstreckenträger unterstützt werden, anzeigt, $T_s^{\mu}$ eine durchschnittliche orthogonale Frequenzmultiplex-OFDM-Symboldauer anzeigt und $OH^{(j2)}$ "Overhead"-Werte unterschiedlicher Aufwärtsstreckenträger anzeigt.

6. Bahndrehimplus-OAM-basiertes Kommunikationsverfahren, umfassend: Empfangen (202), durch ein Benutzerendgerät, einer Funkrufanzeigenachricht von einem Zugangsnetzwerkgerät, wobei die Funkrufanzeigenachricht eine Anzahl von OAM-Modalitäten eines Funkrufkanals führt, und die Anzahl von OAM-Modalitäten des Funkrufkanals kleiner als oder gleich einer maximalen Anzahl von Abwärtsstrecken-OAM-Modalitäten ist, die von dem Benutzerendgerät unterstützt wird und von dem Zugangsnetzwerkgerät basierend auf der Benutzerendgerätekategorie oder der Benutzerendgeräte-Abwärtsstreckenkategorie bestimmt wird; und Demodulieren (203), durch das Benutzerendgerät, von Daten in dem Funkrufkanal basierend auf der Anzahl von OAM-Modalitäten des Funkrufkanals.

7. Benutzerendgerät, umfassend:

einen Prozessor und einen Speicher, die miteinander gekoppelt sind, wobei
der Prozessor dazu konfiguriert ist, ein in dem Speicher gespeichertes Computerprogramm aufzurufen, um das Verfahren nach Anspruch 6 durchzuführen.

8. Zugangsnetzwerkgerät, umfassend:

einen Prozessor und einen Speicher, die miteinander gekoppelt sind, wobei
der Prozessor dazu konfiguriert ist, ein in dem Speicher gespeichertes Computerprogramm aufzurufen, um das Verfahren nach einem der Ansprüche 1 bis 5 durchzuführen.

9. Computerlesbares Speichermedium, wobei
das computerlesbare Speichermedium ein Computerprogramm speichert, und wenn das Computerprogramm durch einen Prozessor eines Zugangsnetzwerkgeräts ausgeführt wird, das Verfahren nach einem der Ansprüche 1 bis 5 durchgeführt wird.

10. Computerlesbares Speichermedium, wobei
das computerlesbare Speichermedium ein Computerprogramm speichert, und wenn das Computerprogramm durch einen Prozessor eines Benutzerendgeräts ausgeführt wird, das Verfahren nach Anspruch 6 durchgeführt wird.

**Revendications**

1. Procédé de communication basé sur OAM, moment angulaire orbital, comprenant :

la réception (201), par un dispositif de réseau d'accès, d'un message de radiomessagerie provenant d'un réseau central, dans lequel le message de radiomessagerie achemine une catégorie de terminal utilisateur ou une catégorie en liaison descendante de terminal utilisateur ; et
l'envoi (202), par le dispositif de réseau d'accès, d'un message d'indication de radiomessagerie à un terminal utilisateur, dans lequel le message d'indication de radiomessagerie achemine une quantité de modalités OAM d'un canal de radiomessagerie, la quantité de modalités OAM du canal de radiomessagerie est inférieure ou égale à une quantité maximum de modalités OAM en liaison descendante prise en charge par le terminal utilisateur, et la quantité maximum de modalités OAM en liaison descendante prise en charge par le terminal utilisateur est déterminée par le dispositif de réseau d'accès sur la base de la catégorie de terminal utilisateur ou de la catégorie en liaison descendante de terminal utilisateur.

2. Procédé selon la revendication 1, dans lequel la catégorie en liaison descendante de terminal utilisateur comprend une ou plusieurs des caractéristiques suivantes : un débit de transmission en liaison descendante maximum pris en charge, si 64 QAM est pris en charge en liaison descendante, ou une quantité maximum de modalités OAM en liaison descendante prise en charge.

3. Procédé selon la revendication 1 ou 2, dans lequel la catégorie de terminal utilisateur comprend une ou plusieurs des caractéristiques suivantes : un débit de transmission en liaison descendante maximum pris en charge, une quantité maximum de couches prise en charge dans un multiplexage spatial en liaison descendante, une quantité maximum de modalités OAM en liaison descendante prise en charge, un débit de transmission en liaison montante maximum pris en charge, si 64 QAM est pris en charge en liaison montante, ou une quantité maximum de modalités OAM en liaison montante prise en charge.

**4.** Procédé selon la revendication 2 ou 3, dans lequel

$$\text{Débit de données maximum-1} = \sum_{l1=1}^{L1} \sum_{j1=1}^{J1} \left( v_{Couches}^{(j1)} \cdot Q_m^{(j1)} \cdot f^{(j1)} \cdot R_{\max} \cdot \frac{N_{PRB}^{BW(j1),\mu} \cdot 12}{T_s^{\mu}} \cdot \left( 1 - OH^{(j1)} \right) \right)$$

dans lequel
le débit de données maximum-1 indique le débit de transmission en liaison descendante maximum pris en charge, L1 indique une quantité de modalités OAM en liaison descendante prise en charge par le dispositif de réseau d'accès, J1 indique une quantité de porteuses en liaison descendante prise en charge par le dispositif de réseau d'accès,

$v_{Couches}^{(j1)}$ indique des quantités maximum de couches à entrées multiples sorties multiples prises en charge par différentes porteuses en liaison descendante, $Q_m^{(j1)}$ indique des ordres de modulation maximum pris en charge par différentes porteuses en liaison descendante, $f^{(j1)}$ indique des facteurs ajustables de différentes porteuses en liaison

descendante, $R_{\max}$ indique une constante de conversion, $N_{PRB}^{BW(j1),\mu}$ indique des quantités de blocs de ressources physiques prises en charge par une bande passante correspondante de différentes porteuses en liaison descen-

dante, $T_s^{\mu}$ indique une durée moyenne d'un symbole de multiplexage par répartition orthogonale de la fréquence, OFDM, et $OH^{(j1)}$ indique des valeurs de surdébit de différentes porteuses en liaison descendante.

**5.** Procédé selon la revendication 3 ou 4, dans lequel

$$\text{Débit de données maximum-2} = \sum_{l2=1}^{L2} \sum_{j2=1}^{J2} \left( v_{Couches}^{(j2)} \cdot Q_m^{(j2)} \cdot f^{(j2)} \cdot R_{\max} \cdot \frac{N_{PRB}^{BW(j2),\mu} \cdot 12}{T_s^{\mu}} \cdot \left( 1 - OH^{(j2)} \right) \right)$$

dans lequel
le débit de données maximum-2 indique le débit de transmission en liaison montante maximum pris en charge, L2 indique une quantité de modalités OAM en liaison montante prise en charge par le terminal utilisateur, J2 indique une quantité de porteuses en liaison montante prise en charge par le terminal utilisateur, $v_{Couches}^{(j2)}$ indique des quantités maximum de couches à entrées multiples sorties multiples prises en charge par différentes porteuses en liaison

montante, $Q_m^{(j2)}$ indique des ordres de modulation maximum pris en charge par différentes porteuses en liaison montante, $f^{(j2)}$ indique des facteurs ajustables de différentes porteuses en liaison montante, $R_{\max}$ indique une

constante de conversion, $N_{PRB}^{BW(j2),\mu}$ indique des quantités de blocs de ressources physiques prises en charge par une bande passante correspondante de différentes porteuses en liaison montante, $T_s^{\mu}$ indique une durée moyenne d'un symbole de multiplexage par répartition orthogonale de la fréquence, OFDM, et $OH^{(j2)}$ indique des valeurs de surdébit de différentes porteuses en liaison montante.

**6.** Procédé de communication basé sur OAM, moment angulaire orbital, comprenant : la réception (202), par un terminal utilisateur, d'un message d'indication de radiomessagerie provenant d'un dispositif de réseau d'accès, dans lequel le message d'indication de radiomessagerie achemine une quantité de modalités OAM d'un canal de radiomessagerie, et la quantité de modalités OAM du canal de radiomessagerie est inférieure ou égale à une quantité maximum de modalités OAM en liaison descendante prise en charge par le terminal utilisateur et déterminée par le dispositif de réseau d'accès sur la base de la catégorie de terminal utilisateur ou de la catégorie en liaison descendante de terminal utilisateur ; et

la démodulation (203), par le terminal utilisateur, de données dans le canal de radiomessagerie sur la base de la quantité de modalités OAM du canal de radiomessagerie.

7. Terminal utilisateur, comprenant :

un processeur et une mémoire qui sont couplés l'un à l'autre, dans lequel
le processeur est configuré pour invoquer un programme informatique stocké dans la mémoire, pour mettre en œuvre le procédé selon la revendication 6.

8. Dispositif de réseau d'accès, comprenant :

un processeur et une mémoire qui sont couplés l'un à l'autre, dans lequel
le processeur est configuré pour invoquer un programme informatique stocké dans la mémoire, pour mettre en œuvre le procédé selon l'une quelconque des revendications 1 à 5.

9. Support de stockage lisible par ordinateur, dans lequel

le support de stockage lisible par ordinateur stocke un programme informatique, et lorsque le programme informatique est exécuté par un processeur d'un dispositif de réseau d'accès,
le procédé est mis en œuvre selon l'une quelconque des revendications 1 à 5.

10. Support de stockage lisible par ordinateur, dans lequel

le support de stockage lisible par ordinateur stocke un programme informatique, et lorsque le programme informatique est exécuté par un processeur d'un terminal utilisateur,
le procédé est mis en œuvre selon la revendication 6.

FIG. 1-A

FIG. 1-B

FIG. 1-C

FIG. 1-D

Y

Δ φ

X

Array element

FIG. 1-E

| User terminal | Access network device | Core network |
|---|---|---|

201: Paging message
(User terminal category or user terminal downlink category)

202: Paging indication message
(quantity of OAM modalities of a paging channel)

203: Demodulate data in the paging channel based on the quantity of OAM modalities of the paging channel

FIG. 2

FIG. 3

| User terminal | | Access network device |
|---|---|---|

401: Downlink synchronization

402: Uplink synchronization

403: RRC connection setup request message

404: RRC connection setup request acknowledgement message

405: Capability reporting request

406: Generate a capability reporting message (which carries an OAM modality capability indication)

407: Capability reporting message

FIG. 4

```
┌─────────────────────┐              ┌─────────────────────┐
│                     │              │   Access network    │
│    User terminal    │              │       device        │
│                     │              │                     │
└─────────────────────┘              └─────────────────────┘
           │                                    │
           │              ┌─────────────────────────────────────┐
           │              │ 501: Determine OAM modalities for at │
           │              │         least two subframes          │
           │              └─────────────────────────────────────┘
           │                                    │
           │        502: At least two subframes │
           │◄───────────────────────────────────│
           │                                    │
┌──────────────────────────────────────┐        │
│ 503: Demodulate a radio frame based on an      │
│   association relationship between OAM         │
│ modalities corresponding to all of the at least│
│             two subframes             │        │
└──────────────────────────────────────┘        │
           │                                    │
```

FIG. 5-A

FIG. 5-B

| $\tilde{b}(i)$, $\tilde{b}(i+1)$ | I | Q |
|:---:|:---:|:---:|
| 00 | $\dfrac{1}{\sqrt{2}}$ | $\dfrac{1}{\sqrt{2}}$ |
| 01 | $\dfrac{1}{\sqrt{2}}$ | $-\dfrac{1}{\sqrt{2}}$ |
| 10 | $-\dfrac{1}{\sqrt{2}}$ | $\dfrac{1}{\sqrt{2}}$ |
| 11 | $-\dfrac{1}{\sqrt{2}}$ | $-\dfrac{1}{\sqrt{2}}$ |

FIG. 5-C

FIG. 5-D

| User terminal | | Access network device |
|---|---|---|

601: Determine OAM modalities for at least two subframes of a radio frame

602: First information

603: At least two subframes

604: Demodulate the radio frame based on an association relationship between OAM modalities corresponding to all of the at least two subframes

605: Obtain a frequency offset of an uplink reference signal

606: Second OAM modality sequence

607: Third OAM modality sequence

FIG. 6-A

| First field | $\Delta l$ |
|:---:|:---:|
| 00 | 1 |
| 01 | 2 |
| 10 | 4 |
| 11 | 8 |

FIG. 6-B

| First field | $\Delta l$ | Subcarrier spacing (kHz) |
|:---:|:---:|:---:|
| 00 | 1 | 15 |
| 01 | 2 | 30 |
| 10 | 4 | 60 |
| 11 | 8 | 120 |

FIG. 6-C

FIG. 7

FIG. 8

900

| Memory | | Processor |
| 920 | | 910 |

FIG. 9

1000

| Memory | | Processor |
| 1020 | | 1010 |

FIG. 10

FIG. 11

FIG. 12

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019192303 A1
- US 2017086165 A1
- US 2016338005 A1
- WO 2019030938 A1
- US 2016270028 A1
- US 2017117626 A1
- WO 2019186222 A1

**Non-patent literature cited in the description**

- **CHENG WENCHI et al.** Orbital Angular Momentum for Wireless Communications. *IEEE Wireless Communications*, 01 February 2019